# EUROPÄISCHE PATENTANMELDUNG

(11) **EP 3 366 370 A1**
(43) Veröffentlichungstag der Anmeldung: **29.08.2018**
(21) Anmeldenummer: 17157421.3
(22) Anmeldetag: 22.02.2017
(51) Int. Cl.: B01J 19/00, B01L 3/00

(54) **VORRICHTUNG ZUR SYNTHESE VON OLIGONUKLEOTIDEN**

(71) Anmelder: Briefcase Biotec GmbH, 8020 Graz (AT)
(72) Erfinder: MURER, Alexander, 8020 Graz (AT); JOST, Martin, 8020 Graz (AT); TITTELBACH, Bernhard, 8010 Graz (AT); DIETHARDT, Reinhard, 8741 Weißkirchen (AT)
(74) Vertreter: KLIMENT & HENHAPEL

(57) **Zusammenfassung**

Um eine kostengünstige und zeitnahe Synthese auch von geringen Mengen an Oligonukleotiden zu ermöglichen wird erfindungsgemäß eine die folgenden Bestandteile umfassende Vorrichtung vorgeschlagen:
- eine Reagenzbehälter-Aufnahme (1) zur Aufnahme eines mehrere Reagenzbehälter (18) umfassenden Reagenzbehälter-Trägers (17);
- einen wechselbaren mikrofluidischen Chip (10) umfassend eine Synthesekammer, fluidische Anschlüsse sowie mikrofluidische Ventile;
- eine Steuereinrichtung (5);
- fluidische Verbindungsmittel (2);
wobei die Vorrichtung in einer Bestückungsposition mit dem mikrofluidischen Chip (10) und mit dem Reagenzbehälter-Träger (17) bestückbar ist,
wobei die Reagenzbehälter-Aufnahme (1), der mikrofluidische Chip (10) und die fluidischen Verbindungsmittel (2) von der Bestückungsposition in eine Betriebsposition bringbar sind,
in welcher Betriebsposition die Reagenzbehälter-Aufnahme (1), der mikrofluidische Chip (10) und die fluidischen Verbindungsmittel (2) derart zueinander positioniert sind,
dass die mikrofluidischen Ventile des mikrofluidischen Chips (10) an der Steuereinrichtung (5) angeschlossen sind,
dass in der Reagenzbehälter-Aufnahme (1) angeordnete Reagenzbehälter (18) über die fluidischen Verbindungsmittel (2) mit den fluidischen Anschlüssen verbunden sind,
sodass in Abhängigkeit der Ventilstellung der mikrofluidischen Ventile Reagenzien aus den Reagenzbehältern (18) in Richtung der Synthesekammer (14) förderbar sind.

## Beschreibung

### GEBIET DER ERFINDUNG

Die Erfindung betrifft eine Vorrichtung zur Synthese von Oligonukleotiden, vorzugweise von DNA-Strängen, sowie einen mikrofluidischer Chip für eine Vorrichtung zur Synthese von Oligonukleotiden, einen Reagenzbehälter-Träger zur Aufnahme in eine Vorrichtung zur Synthese von Oligonukleotiden und ein Verfahren zum Betreiben einer Vorrichtung zur Synthese von Oligonukleotiden.

### STAND DER TECHNIK

Oligonukleotide sind aus wenigen Nukleotiden, sowohl DNA als auch RNA, aufgebaute Oligomere. Beispielsweise kann es sich bei den Oligonukleotiden um Fragmente eines eine Vielzahl an Nukleotiden enthaltenden DNA- oder RNA-Stranges handeln. Die Nukleotidsequenz eines Oligonukleotids umfasst üblicherweise zwischen 15 und 100, vorzugsweise zwischen 15 und 50, Nukleotideinheiten, wobei auch kürzere oder längere Nukleotidsequenzen denkbar sind.

Insbesondere auf dem Gebiet der molekularen Biologie spielen Oligonukleotide eine wichtige Rolle, da sie beispielsweise als Primer für Polymerase-Kettenreaktion (PCR), als Primer für die DNA Sequenzierung, als Bausteine für das Vectordesign oder als Bausteine für die künstliche Gensynthese verwendet werden. Anwendung finden Oligonukleotide auch als Sonden, insbesondere bei der Real Time Quantitative PCR, oder in Oligonukleotid-Chips.

Oligonukleotide sind in der Regel durch eine rein chemische Synthese, bei der einzelne Nukleotide unter Einsatz geeigneter Katalysatoren direkt miteinander verkettet werden, herstellbar.

Für die Synthese gesamter DNA-Stränge wird in der Regel auf Methoden der rekombinatorischen DNA Synthese zurückgegriffen, bei der DNA Sequenzen auf natürlichem Weg repliziert und vervielfältig werden, nachfolgend zerteilt und wieder neu zusammengesetzt werden, um die gewünschte DNA Sequenz zu erhalten. Alternativ können längere DNA-Stränge mit beliebiger DNA-Sequenz unter Einsatz geeigneter enzymatischer Katalysatoren aus kürzeren, chemisch synthetisierten Oligonukleotiden zusammengesetzt werden.

Für den praktischen Laborbetrieb müssen Oligonukleotide als Ausgangsstoffe jeweils neu synthetisiert werden. Oftmals ist in Laboren, insbesondere in kleinen und mittelgroßen Laboren, die notwendige Infrastruktur für eine Synthese der Oligonukleotide nicht vorhanden. Vorrichtungen zur DNA Synthese gemäß dem Stand der Technik, auch DNA-Synthesizer genannt, sind üblicherweise großvolumige Geräte, die mit mehreren Behältern mit organischchemischen Synthese-Reagenzien bestückt werden müssen. Einige Reagenzien haben nach der Bestückung eine begrenzte Lebenszeit, sodass ein DNA-Synthesizer in der Praxis im durchgehenden Betrieb gehalten werden muss. Beim Betrieb fallen, hauptsächlich bedingt durch die internen Volumina des Geräts, organische Lösungsmittelabfälle im Litermaßstab an, die speziell entsorgt werden müssen. Für die Handhabung des DNA-Synthesizers und der Reagenzien sowie Abfälle ist daher in der Regel auf diese Aufgabe spezialisiertes Personal notwendig.

Um diese Probleme zu vermeiden und Kosten zu sparen, wird die Oligonukleotid-Synthese in der Regel an Dritthersteller ausgelagert. Dieser Bezug von Oligonukleotiden von einem Dritthersteller ist jedoch mit entscheidenden Nachteilen hinsichtlich des Faktors Zeit und damit letztlich auch Kosten verbunden: Da die Synthese vom Dritthersteller in der Regel nur nach Bedarf erfolgt, kommt es bei der Auslagerung der Synthese zu erheblichen Zeitverlusten, da neben der Dauer der Synthese auch die Auftragskapazität des Drittherstellers, die Lieferverzögerungen und die Transportzeiten berücksichtigt werden müssen. Es ist also in der Praxis oft nicht möglich zeitnah die benötigten Oligonukleotide beziehen zu können. Daher muss die Bestellung der Oligonukleotide von langer Hand geplant werden, um die Verfügbarkeit im Labor zum richtigen Zeitpunkt zu garantieren. Dieser Prozess kann die Forschungsgeschwindigkeit eines Labors erheblich hemmen, insbesondere wenn das Ergebnis eines Forschungszyklus in die Planung des nächsten einfließen soll. Durch die dadurch verursachten Verzögerungen und Wartezeiten fallen zusätzliche Personalkosten an, die die mit einem gegebenen Forschungsbudget erreichbaren Forschungsergebnisse insgesamt reduzieren können.

Für die Synthese einzeln verwendeter kurzer Oligonukleotide (meist Primer) mit einer Länge bis zu zweihundert Nukleotiden ist die säulenbasierte Synthese nach wie vor Stand der Technik. Aus den beschriebenen Gründen verlagerte sich die Entwicklung von DNA-Synthesizern in den letzten Jahrzehnten von Geräten für die Verwendung im eigenen Labor in Richtung effizienterer Anlagen für den industriellen Einsatz bei Drittherstellern. Der Fokus von Entwicklungen liegt heute daher üblicherweise bei höherem parallelen Synthesedurchsatz durch den Einsatz dutzender bis hunderter Säulen und verbesserter Automatisierbarkeit. Ein Extrem dieser Entwicklung stellt die Verwendung von DNA-Microarray-Chips zur Synthese dar. Dabei dienen mehrere Tausend Linker-Spots an der Oberfläche eines Chips als Ausgangspunkt für die parallele Synthese kurzer Oligonukleotide mit unterschiedlicher Sequenz. Diese werden dann beispielsweise zu synthetischen Genen zusammengesetzt, wobei aufwändige theoretische Verfahren eingesetzt werden müssen, um unerwünschte Oligonukleotidkombinationen zu vermeiden. Mit steigendem theoretischem Durchsatz ist zusätzlich die Notwendigkeit stetig hoher Auslastung verbunden, damit die Wirtschaftlichkeit solcher Anlagen und Prozesse gewährleistet ist. Eine Gegenentwicklung zu den beschriebenen Hochdurchsatz-Anwendungen stellt die gegenwärtig hohe Nachfrage nach Oligonukleotiden mit zusätzlich integrierten modifizierten Nukleotiden dar, die beispielsweise als Sonden oder "Tag"-Moleküle als definiertes Ankermolekül bei verschiedenen Anwendungen dienen. Diese werden zwar in geringerer Gesamtmenge auf kleiner dimensionierten Geräten synthetisiert, aber üblicherweise dennoch von Drittherstellern bezogen.

Ein weiterer Nachteil des Stands der Technik besteht weiters darin, dass die Nukleotidsequenz dem Dritthersteller übermittelt werden muss und so grundsätzlich die Gefahr einer wiederrechtlichen Entnahme besteht.

### AUFGABE DER ERFINDUNG

Es ist daher eine Aufgabe der Erfindung, die Nachteile des Stands der Technik zu überwinden und eine Vorrichtung zur Synthese von Oligonukleotiden vorzuschlagen, welche eine zeitnahe und damit kostengünstige Synthese auch von geringen Mengen an Oligonukleotiden ermöglicht. Darüberhinaus sollen Betrieb und Anschaffung der erfindungsgemäßen Vorrichtung auch für kleine und mittelgroße Labore wirtschaftlich sinnvoll sein.

### DARSTELLUNG DER ERFINDUNG

Die erfindungsgemäße Vorrichtung umfasst mehrere Komponenten, deren Zusammenspiel die Synthese von Oligonukleotiden in einer Betriebsposition der Vorrichtung ermöglicht. Diese Komponenten sind eine Reagenzbehälter-Aufnahme, welche mit Reagenzien zur Durchführung der Synthese bestückbar ist, ein wechselbarer mikrofluidischer Chip, in welchem die Synthese der Oligonukleotide in einer Synthesekammer stattfindet, fluidische Verbindungsmittel, über welche die Reagenzien von den Reagenzbehältern zum mikrofluidischen Chip förderbar sind sowie eine Steuereinrichtung zur Regelung der Zuführung der Reagenzien in die Synthesekammer. Die Synthesekammer kann beispielsweise ein Trägermedium enthalten, welches Linker-Moleküle zum Start der Synthesereaktion aufweist. Denkbar sind dabei für das Trägermedium beispielsweise poröse Strukturen, wie sogenannte Beads aus controlled pore glass (CPG) oder makroporöses Polystyrol (MPPS). Um das Trägermedium bei der Durchströmung der Synthesekammer mit einem Reagenz in der Synthesekammer zu halten, kann eine Rückhaltestruktur vorgesehen sein. Weiters wäre es denkbar, dass die Oberfläche der Synthesekammer selbst derart modifiziert wird, dass sie Linker-Moleküle trägt und/oder durch geeignete Methoden der Oberflächenvergrößerung eine hohe Gesamtoberfläche aufweist.

Ein Aspekt der Erfindung besteht darin, dass die Reagenzbehälter-Aufnahme, die fluidischen Verbindungsmittel, und vorzugsweise auch die Steuereinrichtung in einer Bestückungsposition derart in der Vorrichtung positioniert sind, dass der mikrofluidische Chip in die Vorrichtung einführbar und die Reagenzbehälter-Aufnahme mit Reagenzien bestückbar ist. Um diese Vorgänge zu ermöglichen, sind der mikrofluidische Chip und die in der Reagenzbehälter-Aufnahme befindlichen Reagenzbehälter, vorzugsweise des Reagenzbehälter-Trägers, in der Bestückungsposition nicht mit den fluidischen Verbindungsmitteln verbunden.

Der mikrofluidische Chip, in dem die Synthese stattfindet, ist auswechselbar, da ein einzelner Chip in der Regel nur für eine begrenzte Anzahl an Synthesen geeignet ist. Zumeist ist sogar nur ein Synthesevorgang mit einem Chip möglich, sodass nach jeder erfolgten Synthese der Chip ausgetauscht werden muss, indem ein gebrauchter Chip, mit dem die vorangegangene Synthese durgeführt wurde, aus der Vorrichtung entfernt wird und die Vorrichtung mit einem neuen mikrofluidischen Chip bestückt wird. In der Regel erfolgt zumindest die Bestückung, vorzugsweise auch die Entnahme des gebrauchten Chips, in der Bestückungsposition.

In der Bestückungsposition kann einerseits die Reagenzbehälter-Aufnahme mit Reagenzbehältern bestückt werden andererseits können leere Reagenzbehälter aus der Reagenzbehälter-Aufnahme entnommen werden. Somit ist ein Austausch der Reagenzbehälter und der darin befindlichen Reagenzien möglich. Vorteilhaft ist es dabei, wenn zumindest zwei Reagenzbehälter, vorzugsweise alle Reagenzbehälter, in einen Reagenzbehälter-Träger integriert sind. Dabei sind die Reagenzbehälter durch den Reagenzbehälter-Träger fest miteinander verbunden und können nur als Einheit ausgetauscht werden. Dadurch kann ein leerer Reagenzbehälter-Träger in einfacher Art und Weise als Verbrauchsteil durch einen neuen, gefüllten Reagenzbehälter-Träger ersetzt werden, ohne dass der Benutzer die Reagenzien einzeln nachfüllen und überwachen muss.

Im mikrofluidischen Chip wird das an sich bekannte mikrofluidische Verhalten von Flüssigkeiten ausgenützt, wobei der Durchmesser der mikrofluidischen Kanäle in der Regel weniger als ein Millimeter beträgt, üblicherweise liegt dieser zwischen 100 Nanometer und 500 Mikrometer. Dabei bilden sich Strömungen mit besonders niedrigen Reynolds Zahlen aus, was einer nahezu ausschließlich laminaren Strömung entspricht. Der mikrofluidische Chip weist eine Reihe an fluidischen Anschlüssen auf, die mit den fluidischen Verbindungsmitteln verbindbar sind, um Reagenzien aus den Reagenzbehältern in Richtung der Synthesekammer zu transportieren. Für jedes Reagenz, welches zur Synthese benötigt wird, ist zumindest ein eigener fluidischer Anschluss vorgesehen. Die fluidischen Anschlüsse sind über eine fluidische Verbindung, die in der Regel zumindest abschnittsweise mikrofluidisch ausgebildet ist, mit der Synthesekammer verbunden. Beispielsweise kann die Synthesekammer in einem Synthesekanal der fluidischen Verbindung angeordnet sein. Jedem fluidischen Anschluss ist ein mikrofluidisches Ventil zugeordnet, über welches die fluidische Verbindung zwischen dem fluidischen Anschluss und der Synthesekammer von einem geschlossenen Zustand, in welchem die fluidische Verbindung unterbrochen ist und kein Reagenz in Richtung der Synthesekammer strömen kann, in einen geöffneten Zustand, in welchem die fluidische Verbindung geöffnet ist, bringbar ist. Natürlich ist es auch denkbar, dass das mikrofluidische Ventil in eine Ventilstellung bringbar ist, in dem das mikrofluidische Ventil teilweise geöffnet ist.

Ein weiterer Aspekt der Erfindung besteht darin, dass die Reagenzbehälter-Aufnahme, die fluidischen Verbindungsmittel, der mikrofluidische Chip und vorzugsweise auch die Steuereinrichtung in einer Betriebsposition derart in der Vorrichtung positioniert sind, dass über die fluidischen Verbindungsmittel eine Verbindung zwischen den in der Reagenzbehälter-Aufnahme angeordneten Reagenzbehältern und den fluidischen Anschlüssen des mikrofluidischen Chips hergestellt ist und der mikrofluidische Chip an die Steuereinrichtung angeschlossen ist, um eine gesteuerte Aktuierung der mikrofluidischen Ventile zu ermöglichen. Die Steuereinrichtung ist dabei ausgelegt, die Ventilstellung der mikrofluidischen Ventile derart zu steuern, dass die Reagenzien in der durch die Synthese vorgegebenen Menge und Reihenfolge in die Synthesekammer gefördert werden.

Für die Aktuierung der mikrofluidischen Ventile ist es vorteilhaft, wenn die Steuereinrichtung ein pneumatisches System umfasst, über welches die mikrofluidischen Ventile angesteuert werden. Insbesondere von Vorteil ist ein pneumatisches System dann, wenn die mikrofluidischen Ventile des mikrofluidischen Chips eine Membran aufweisen und die Membran mittels Änderung des auf die Membran wirkenden Drucks aus dem pneumatischen System der Steuereinrichtung die fluidische Verbindung freigibt oder unterbricht. Es ist aber auch denkbar, dass die mikrofluidischen Ventile mechanisch aktuiert werden, beispielsweise über piezo-elektrische Elemente.

Das pneumatische System der Steuereinrichtung umfasst dabei in der Regel eine Mehrzahl an Steuerleitungen, welche direkt oder indirekt, beispielsweise über einen Anschlussabschnitt der Chip-Aufnahme, an die mikrofluidischen Ventile anschließbar sind. Die Steuerleitungen können beispielsweise als Schläuche oder Rohre ausgebildet sein.

In der Betriebsposition ist durch die von der Steuereinrichtung vorgegebene Reihenfolge, in der die Ventilstellung der mikrofluidischen Ventile freigegeben und wieder gesperrt werden, die Synthese des Oligonukleotids durchführbar. Aufgrund der den mikrofluidischen Eigenschaften geschuldeten geringen Abmessungen des mikrofluidischen Chips, in dem die Synthese stattfindet, ist die Baugröße der Vorrichtung erheblich gesenkt. Ebenfalls lassen sich durch die erfindungsgemäße Vorrichtung selbst kleine Mengen an Oligonukleotiden kostengünstig herstellen, da kein Dritthersteller mehr benötigt wird. Die erfindungsgemäße Vorrichtung zeichnet sich des weiteren durch eine einfache Handhabbarkeit aus, da lediglich die Reagenzbehälter-Aufnahme mit den Reagenzien bestückt werden muss und die Vorrichtung mit einem mikrofluidischen Chip bestückt werden muss und die Nukleotidsequenz des Oligonukleotids in die Steuereinrichtung eingespeist werden muss, um die Synthese zu starten.

Daher wird die eingangs gestellte Aufgabe in einer erfindungsgemäßen Vorrichtung zur Synthese von Oligonukleotiden, vorzugweise von DNA-Strängen, dadurch gelöst, dass die Vorrichtung folgende Bestandteile umfasst:
- eine Reagenzbehälter-Aufnahme zur Aufnahme eines mehrere Reagenzbehälter für Reagenzien zur Synthese der Oligonukleotide umfassenden Reagenzbehälter-Trägers;
- einen wechselbaren mikrofluidischen Chip umfassend eine Synthesekammer zur Synthese der Oligonukleotide, fluidische Anschlüsse für die Zufuhr der Reagenzien sowie mikrofluidische Ventile,
   wobei die fluidischen Anschlüsse über eine fluidische Verbindung mit der Synthesekammer verbunden sind und die fluidische Verbindung zwischen jeweils einem fluidischen Anschluss und der Synthesekammer mittels einem der mikrofluidischen Ventile unterbrechbar bzw. freigebbar ist;
- eine Steuereinrichtung, vorzugsweise umfassend ein pneumatisches System, zur Steuerung der mikrofluidischen Ventile;
- fluidische Verbindungsmittel zum Transport der Reagenzien aus den Reagenzbehältern zu den fluidischen Anschlüssen des mikrofluidischen Chips,
wobei in einer Bestückungsposition die Vorrichtung mit dem mikrofluidischen Chip bestückbar ist und die Reagenzbehälter-Aufnahme mit dem Reagenzbehälter-Träger bestückbar ist,
wobei die Reagenzbehälter-Aufnahme, der mikrofluidische Chip und die fluidischen Verbindungsmittel von der Bestückungsposition in eine Betriebsposition bringbar sind,
in welcher Betriebsposition die Reagenzbehälter-Aufnahme, der mikrofluidische Chip und die fluidischen Verbindungsmittel derart zueinander positioniert sind, dass die mikrofluidischen Ventile des mikrofluidischen Chips an der Steuereinrichtung angeschlossen sind, dass in der Reagenzbehälter-Aufnahme angeordnete Reagenzbehälter über die fluidischen Verbindungsmittel mit den fluidischen Anschlüssen des mikrofluidischen Chips verbunden sind, sodass in Abhängigkeit der Ventilstellung der mikrofluidischen Ventile Reagenzien aus den Reagenzbehältern in Richtung der Synthesekammer förderbar sind.

Die in der erfindungsgemäßen Vorrichtung verwendete mikrofluidische Technologie ermöglicht einen im Vergleich zum Stand der Technik effizienteren Einsatz von Reagenzien ohne technisch bedingte Verluste. Die erst dadurch ermöglichte Reduktion des Reagenzienvorrats erleichtert die Handhabung der Vorrichtung so weit, dass die Erfindung direkt in kleinen und mittelgroßen Laboren im Gegensatz zu industriellen Drittherstellern betrieben werden kann.

Grundsätzlich können Reagenzbehälter-Aufnahme, mikrofluidischer Chip, fluidische Verbindungsmittel und vorzugsweise die Steuereinrichtung entlang beliebiger Bewegungsrichtungen, beispielsweise lineare Bewegungsrichtungen, Kreisbahnen oder Kurvenbahnen, bewegbar in der Vorrichtung angebunden sein, um von der Bestückungsposition in die Betriebsposition gebracht zu werden. Die Bewegung kann entweder durch eine Aktuatoreinrichtung, welche vorzugsweise eine oder mehrere elektrische Antriebseinheiten umfasst, realisiert werden oder von Hand vorgenommen werden.

In einer Ausführungsvariante der Erfindung ist vorgesehen, dass eine Aktuatoreinrichtung vorgesehen ist, mit welcher Aktuatoreinrichtung die Reagenzbehälter-Aufnahme, der mikrofluidische Chip, die fluidischen Verbindungsmittel und vorzugsweise die Steuereinrichtung, von der Bestückungsposition in die Betriebsposition bringbar sind, wobei die Aktuatoreinrichtung eine lineare Bewegungsachse aufweist und die Positionierung von Reagenzbehälter-Aufnahme, fluidischen Verbindungsmitteln und mikrofluidischem Chip entlang der Bewegungsachse erfolgt. Mittels der Aktuatoreinrichtung kann die Vorrichtung automatisiert von der Bestückungsposition in die Betriebsposition gebracht werden. Durch die lineare Bewegung stellen sich einfach zu beherrschende kinematische Zusammenhänge ein und die notwendige Mechanik ist kostengünstig herstellbar.

Um den mikrofluidischen Chip zu positionieren ist in der Regel eine Chip-Aufnahme vorgesehen, in welche der mikrofluidische Chip in der Bestückungsposition einlegbar ist. Durch Verfahren der Chip-Aufnahme entlang der vorzugsweise linearen Bewegungsachse der Aktuatoreinrichtung ist der Chip entlang der Bewegungsachse positionierbar. Die Chip-Aufnahme kann zum einfachen Wechseln des mikrofluidischen Chips ein ladenartig ausziehbares Aufnahmefach aufweisen, welches von der Bestückungsposition, in der der mikrofluidische Chip in das Aufnahmefach einlegbar ist, in eine Zwischenposition bewegbar ist, in der die fluidischen Anschlüsse des mikrofluidischen Chips fluchtend zu den fluidischen Verbindungsmitteln positioniert sind. Vorzugsweise erfolgt die Bewegung des Aufnahmefachs dabei in einer Richtung normal zur linearen Bewegungsachse.

Vorteilhaft ist es auch, wenn die Chip-Aufnahme einen, vorzugsweise plattenförmigen, Anschlussabschnitt zum Anschluss des mikrofluidischen Chips an die Steuereinrichtung aufweist. Der Anschlussabschnitt ist vorzugsweise auf der den fluidischen Verbindungsmitteln gegenüberliegenden Seite des mikrofluidischen Chips angeordnet und fungiert auch als Klemmfläche zum Klemmen des mikrofluidischen Chips. Beispielsweise kann der Anschlussabschnitt Steuerleitungskanäle für das pneumatische System der Steuereinrichtung aufweisen, welche in der Betriebsposition jeweils an ein mikrofluidisches Ventil des mikrofluidischen Chips angeschlossen sind. Vorzugsweise ist jeweils ein Steuerleitungskanal des Anschlussabschnitts mit einer Steuerleitung des pneumatischen Systems der Steuereinrichtung verbunden.

Grundsätzlich ist es denkbar, dass über die Aktuatoreinrichtung sowohl Chip-Aufnahme, Reagenzbehälter-Aufnahme als auch die fluidischen Verbindungsmittel entlang der linearen Bewegungsachse verschiebbar an einem Rahmengestell der Aktuatoreinrichtung angebunden sind oder dass entweder die Chip-Aufnahme oder die Reagenzbehälter-Aufnahme an das Rahmengestell fest angebunden sind, während die jeweils anderen beiden Elemente verschiebbar angebunden sind.

Eine weitere Ausführungsvariante der Erfindung, die einen besonders einfachen Aufbau der Vorrichtung ermöglicht, sieht vor, dass die Aktuatoreinrichtung ein Rahmengestell aufweist, wobei die fluidischen Verbindungsmittel, vorzugsweise mittels einer Trägerplatte, fest am Rahmengestell angebunden sind und wobei die Reagenzbehälter-Aufnahme und eine Chip-Aufnahme zur Aufnahme des mikrofluidischen Chips vorzugsweise linear entlang der Bewegungsachse in Richtung der fluidischen Verbindungsmittel verschiebbar am Rahmengestell angebunden sind, um die Reagenzbehälter-Aufnahme und den mikrofluidischen Chip, vorzugsweise über die Positionierung der Chip-Aufnahme, von der Bestückungsposition in die Betriebsposition und umgekehrt zu bringen. Vorzugsweise sind die Chip-Aufnahme und/oder die Reagenzbehälter-Aufnahme als Schlitten ausgebildet, welche entlang zumindest einer vom Rahmengestell ausgebildeten Schiene translatorisch verschiebbar sind. Die Aktuatoreinrichtung kann dabei, insbesondere zur Bewegung der als Schlitten ausgebildeten Chip-Aufnahme und/oder Reagenzbehälter-Aufnahme, beispielsweise einen oder mehrere Spindelantriebe und/oder Riemenantriebe und/oder Linearmotoren aufweisen.

Vorteilhaft ist es, wenn der mikrofluidische Chip durch das Verfahren der Chip-Aufnahme in der Betriebsposition zwischen einer Klemmfläche der Chip-Aufnahme und einer Klemmfläche der Trägerplatte geklemmt ist. Besonders bevorzugt weist die Trägerplatte ein Stützelement auf, wobei der mikrofluidische Chip in der Betriebsposition flächig auf dem Stützelement aufliegt.

Um den vorhanden Bauraum in der Vorrichtung besonders gut ausnützen zu können und damit die Abmessungen der Vorrichtungen möglichst klein zu halten, sind die fluidischen Verbindungsmittel zwischen Reagenzbehälter-Aufnahme und mikrofluidischem Chip angeordnet. Dabei sind die fluidischen Anschlüsse des mikrofluidischen Chips, die in der Betriebsposition an die fluidischen Verbindungsmittel angeschlossen sind, an einer Seite des Chips, beispielsweise an der Unterseite, ausgebildet. Der Anschluss an die Steuereinrichtung, vorzugsweise an das pneumatische System der Steuereinrichtung, erfolgt auf der gegenüberliegenden Seite des Chips, beispielsweise der Oberseite, sodass sowohl genügend Bauraum für die fluidischen Verbindungsmittel vorhanden ist, vorzugsweise in der Trägerplatte, als auch genügend Bauraum für den zur Aktuierung der Ventile notwendigen Teil der Steuereinrichtung, vorzugsweise in der Chip-Aufnahme, vorhanden ist. Daher ist gemäß einer weiteren Ausführungsvariante der Erfindung vorgesehen, dass die Komponenten der Vorrichtung in der Betriebsposition in folgender Reihenfolge, vorzugsweise in Richtung der Bewegungsachse gesehen, zueinander positioniert sind:
- Reagenzbehälter-Aufnahme
- fluidische Verbindungsmittel
- mikrofluidischer Chip,
wobei die fluidischen Anschlüsse auf einer den fluidischen Verbindungsmitteln zugewandten Seite des mikrofluidischen Chips angeordnet sind und die mikrofluidischen Ventile auf einer den fluidischen Anschlüssen gegenüberliegenden Seite des mikrofluidischen Chips an die Steuereinrichtung angeschlossen sind.

Unter fluidischen und/oder Verbindungsmitteln können im Allgemeinen beliebige durchströmbare Elemente, wie Leitungen, Rohre, Schläuche oder Röhrchen verstanden werden. Die Verbindungsmittel können auch mehrere Komponenten umfassen, beispielsweise eine als durchströmbares Element ausgebildete Transportleitung und ein Anschlussstück zum Anschluss an den mikrofluidischen Chip bzw. zum Anschluss an ein pneumatisches System. Die Verbindungsmittel, insbesondere die pneumatischen Verbindungsmittel, können aber auch aus jeweils einer, vorzugsweise nadelförmigen, Transportleitung bestehen.

Um in der Betriebsposition eine dichte Verbindung zwischen den fluidischen Anschlüssen des mikrofluidischen Chips und den fluidischen Verbindungsmitteln herzustellen, ist in einer bevorzugten Ausführungsvariante der erfindungsgemäßen Vorrichtung vorgesehen, dass ein fluidisches Verbindungsmittel jeweils ein Anschlussstück zur Verbindung mit einem der fluidischen Anschlüsse des mikrofluidischen Chips und eine, vorzugsweise nadelförmige, Transportleitung zum Anschluss an einen der Reagenzbehälter umfasst. Das Anschlussstück kann beispielsweise als metallische Hülse ausgebildet sein, welche mit einem als hülsenförmige Auswölbung des mikrofluidischen Chips ausgebildeten mikrofluidischen Anschluss verpressbar ist. In einer weiteren Ausführungsvariante kann das Anschlussstück auch als Dichtelement, vorzugsweise aus Kunststoff, insbesondere Gummi, ausgebildet sein, sodass die Dichtigkeit in der Betriebsposition durch Anpressen einer den fluidischen Anschluss, vorzugsweise kreisringförmig, umgebenden Dichtfläche des mikrofluidischen Chips erreicht wird. Vorzugsweise ist die Transportleitung nadelförmig, in anderen Worten mit einer geringen Querschnittsfläche in Bezug zur Länge der Transportleitung, ausgebildet, wobei das Anschlussstück endseitig an einem Ende der Transportleitung angeordnet ist. Das dem Anschlussstück gegenüberliegende Ende der Transportleitung ist dabei ausgebildet, um ein Versiegelungselement eines Reagenzbehälters, vorzugsweise ein Septum, zu durchdringen.

Gemäß einer weiteren Ausführungsvariante der Erfindung sind pneumatische Verbindungsmittel vorgesehen, über welche ein pneumatisches System, vorzugsweise das pneumatische System der Steuereinrichtung, in der Betriebsposition mit den in der Reagenzbehälter-Aufnahme angeordneten Reagenzbehältern verbindbar ist, um Reagenzien über die fluidischen Verbindungsmittel in Richtung des mikrofluidischen Chips zu fördern. Unter pneumatischem System wird dabei ein über zumindest ein pneumatisches Ventil abschließbares Leitungssystem verstanden, in welchem sich ein, vorzugsweise inertes, unter Druck stehendes Gas befindet. Es kann sich dabei bei dem pneumatischen System zur Förderung der Reagenzien um das pneumatische System der Steuerungseinrichtung handeln, über welches auch die mikrofluidischen Ventile gesteuert werden. Es ist aber auch denkbar, dass das pneumatische System zur Förderung der Reagenzien ein separates, abgeschlossenes System darstellt. Zum Anschluss an die pneumatischen Verbindungsmittel kann das pneumatische System, vorzugsweise das pneumatische System der Steuereinheit, Gasleitungen aufweisen, welche direkt oder indirekt, insbesondere über Gasleitungskanäle in der Trägerplatte, mit den pneumatischen Verbindungsmitteln verbindbar sind. Wenn die Reagenzbehälter über die pneumatischen Verbindungsmittel mit dem pneumatischen System zur Förderung der Reagenzien verbunden ist, kann über die Ventilstellung der pneumatische Ventile der Gasdruck des pneumatischen Systems Druck auf die im Reagenzbehälter befindlichen Reagenzien ausüben, um Reagenzien über die fluidischen Verbindungsmittel in Richtung des mikrofluidischen Chips zu fördern.

Analog zu den fluidischen Verbindungsmitteln, können die pneumatischen Verbindungsmittel jeweils ein hülsenförmiges Anschlussstück zur Verbindung mit dem pneumatischen System und eine, vorzugsweise nadelförmige, Transportleitung zur Einleitung von gasförmigem Medium aus dem pneumatischen System in die Reagenzbehälter umfassen. Bevorzugt ist es jedoch, wenn die pneumatischen Verbindungsmittel jeweils als eine, vorzugsweise nadelförmige, Transportleitung ausgebildet sind. Vorzugsweise ist die Transportleitung nadelförmig, in anderen Worten mit einer geringen Querschnittsfläche in Bezug zur Länge der Transportleitung, ausgebildet, wobei das Anschlussstück endseitig an einem Ende der Transportleitung angeordnet sein kann. Eines der Enden der Transportleitung ist dabei ausgebildet, um ein Versiegelungselement eines Reagenzbehälters, vorzugsweise ein Septum, zu durchdringen.

Besonders vorteilhaft ist es, wenn die fluidischen Verbindungsmittel und die pneumatischen Verbindungsmittel an der Trägerplatte befestigt sind, welche fest am Rahmengestell angebunden ist. Insbesondere kann vorgesehen sein, dass die Trägerplatte Gasleitungskanäle aufweist, über welche im Betriebszustand Gas aus dem pneumatischen System in die pneumatischen Verbindungsmittel gelangt. Die Gasleitungskanäle können mit Gasleitungen des pneumatischen Systems, insbesondere des pneumatischen Systems der Steuereinrichtung, verbunden sein.

Es versteht sich dabei von selbst, dass die Trägerplatte auch mehrteilig ausgebildet sein kann und einzelne Komponenten, insbesondere die zum Anschluss der fluidischen und/oder pneumatischen Verbindungsmittel vorgesehenen Komponenten als Baugruppe der Trägerplatte zusammengefasst sind.

Die Reagenzbehälter, welche in der Betriebsposition vorzugsweise in Form eines Reagenzbehälter-Trägers in der Reagenzbehälter-Aufnahme positioniert sind, sind jeweils durch ein Versiegelungselement, beispielsweise ein Septum, nahezu gasdicht verschlossen, um eine Reaktion der Reagenzien mit der Umgebung zu verhindern. In anderen Worten umfasst der Reagenzbehälter ein durch das Versiegelungselement abgeschlossenes Volumen in dem sich einerseits das Reagens befindet und andererseits ein inertes Gas. In der Betriebsposition befindet sich in einem eine flüssige Reagenz enthaltenden Reagenzbehälter sowohl ein Ende eines fluidischen als auch eines pneumatischen Verbindungsmittels, wobei es sich üblicher Weise jeweils um ein Ende der nadelförmigen Transportleitung des jeweiligen Verbindungsmittels handelt. In der Regel taucht das Ende des fluidischen Verbindungsmittels in das Reagenz ein, während das Ende des pneumatischen Verbindungsmittels nicht in das Reagenz eintaucht, sondern oberhalb der Oberfläche des Reagenz endet. In anderen Worten ist das Ende des pneumatischen Verbindungsmittels näher am Versiegelungselement angeordnet, während das Ende des fluidischen Verbindungsmittels näher an einer dem Versiegelungselement gegenüberliegenden Bodenfläche des Reagenzbehälters angeordnet ist. Strömt nun über das pneumatische Verbindungsmittel Gas aus dem pneumatischen System in das abgeschlossene Volumen des Reagenzbehälters, erhöht sich der Druck im Volumen und Reagenz wird über das fluidische Verbindungsmittel in Richtung der Synthesekammer gefördert. Daher ist in einer weiteren bevorzugten Ausführungsvariante der Erfindung vorgesehen, dass in der Betriebsposition jeweils ein Ende einer Transportleitung eines der fluidischen Verbindungsmittel und ein Ende eines der pneumatischen Verbindungsmittel innerhalb eines eine flüssige Reagenz enthaltenden Reagenzbehälters angeordnet sind, um über den Gasdruck des pneumatischen Systems Reagenz aus dem Reagenzbehälter in Richtung der Synthesekammer zu befördern, wobei die Transportleitung und das pneumatische Verbindungsmittel ein Versiegelungselement des entsprechenden Reagenzbehälters durchdringen.

Neben Reagenzien die bereits in flüssiger Form vorliegen, kann auch vorgesehen sein, dass einige Reagenzien als Feststoff, beispielsweise in Pulverform, vorliegen und erst vor Beginn der Synthese gelöst werden. Vorteilhaft ist das beispielsweise bei für die häufig bei der Synthese von Oligonukleotiden verwendeten Phosphoramidite der Basen Adenin, Guanin, Cytosin, Thymin oder Uracil. Die Reaktionsfähigkeit bzw. Aktivität der in Lösungsmittel gelösten Phosphoramidite lässt nämlich bereits nach 14 Tagen signifikant nach, sodass ein neuer Reagenzbehälter-Träger binnen kürzester Zeit nach der Produktion verbraucht werden müsste und nicht zwischengelagert werden könnte, wenn die Phosphoramidite bereits in gelöster Form in einem Reagenzbehälter enthalten wären. Um diese Nachteile zu überwinden, ist im Reagenzbehälter-Träger für jeden ein Phosphoramidit enthaltenden Reagenzbehälter ein Lösungsmittel, vorzugsweise Acetonitril, enthaltender Reagenzbehälter vorgesehen. Der das Lösungsmittel enthaltende Reagenzbehälter ist dabei über eine Verbindungsleitung mit dem den Feststoff enthaltenden Reagenzbehälter verbunden, wobei das Ende des pneumatischen Verbindungsmittel im das Lösungsmittel enthaltende Reagenzbehälter angeordnet ist, vorzugsweise oberhalb der Oberfläche des Reagenz, und das Ende des fluidischen Verbindungsmittels im den Feststoff enthaltenden Reagenzbehälter angeordnet ist. Die beiden Enden der Verbindungsleitung durchdringen, vorzugsweise nadelartig, jeweils das Versiegelungselement eines der Reagenzbehälter, sodass ein Ende der Verbindungsleitung in dem das Lösungsmittel enthaltenden Reagenzbehälter und das andere Ende in dem den Feststoff enthaltenden Reagenzbehälter angeordnet ist. Der Transport erfolgt analog wie oben beschrieben, jedoch gelangt das Lösungsmittel zuerst über die Verbindungsleitung in den den Feststoff enthaltenden Reagenzbehälter, wo sich der Feststoff im Lösungsmittel auflöst, bevor das Gas über die Verbindungsleitung in den den nunmehr gelösten Feststoff enthaltenden Reagenzbehälter strömt und den Druck in Volumen erhöht, sodass die Lösung über das fluidische Verbindungsmittel in Richtung der Synthesekammer gefördert wird. Daher ist in einer weiteren bevorzugten Ausführungsvariante der Erfindung vorgesehen, dass ein Paar korrespondierender Reagenzbehälter in der Reagenzbehälter-Aufnahme vorgesehen ist, wobei einer der Reagenzbehälter einen Feststoff, vorzugsweise Phosphoramidite der Basen Adenin, Guanin, Cytosin, Thymin oder Uracil in Pulverform, und einer der Reagenzbehälter Lösungsmittel, vorzugsweise Acetonitril, enthält und dass in der Betriebsposition ein Ende eines der pneumatischen Verbindungsmittel in dem das Lösungsmittel enthaltenden Reagenzbehälter angeordnet ist und ein Ende einer Transportleitung eines der fluidischen Verbindungsmittel in dem den Feststoff enthaltenden Reagenzbehälter angeordnet ist und dass eine Verbindungsleitung die beiden Reagenzbehälter miteinander verbindet, sodass über den Gasdruck des pneumatischen Systems Lösungsmittel aus dem einen Reagenzbehälter in den anderen Reagenzbehälter übertritt, sich der Feststoff im Reagenzbehälter im Lösungsmittel löst und die Lösung in Richtung der Synthesekammer förderbar ist.

Ein Aspekt der Erfindung betrifft die einfache Handhabung der Vorrichtung durch den Anwender. In bekannten Vorrichtung zur Synthese von Oligonukleotiden müssen die Füllstände der Reagenzien in den Reagenzbehältern einzeln überwacht werden und die Reagenzien jeweils einzeln nachgefüllt werden, um die Funktionstüchtigkeit der Vorrichtung zu garantieren. Daher müssen im Labor alle Reagenzien für das Nachfüllen der Reagenzbehälter lagernd gehalten werden. In einer erfindungsgemäßen Vorrichtung zur Synthese von Oligonukleotiden wird dieser Nachteil des Stands der Technik dadurch überwunden, dass ein Reagenzbehälter-Träger vorgesehen ist, der Reagenzbehälter für alle für die Synthese notwendigen Reagenzien umfasst. Die Reagenzbehälter sind also durch den Reagenzbehälter-Träger zu einer Einheit verbunden, sodass die Reagenzbehälter nicht mehr einzeln überwacht, nachgefüllt und entnommen werden müssen. Der Reagenzbehälter-Träger kann somit nach einer durch die Menge der Reagenzien vorbestimmten Anzahl an Synthesen als Einheit getauscht werden und durch einen neuen, befüllten Reagenzbehälter-Träger ersetzt werden. Der Reagenzbehälter Träger stellt damit ein einfach zu handhabendes Ersatzteil dar, das eine aufwändige Lagerung und Anschaffung der verschiedenen Reagenzien obsolet macht. Gemäß dieser Ausführungsvariante der Erfindung ist es lediglich notwendig zumindest einen Reagenzbehälter-Träger als Ersatz zu lagern. Daher ist in einer besonders bevorzugten Ausführungsvariante der Erfindung, bei der die Olegonukleotid-Synthese auf Basis von Phosphoramiditen durchgeführt wird, vorgesehen, dass der Reagenzbehälter-Träger zumindest sechs, vorzugsweise zumindest sieben, Reagenzbehälter umfasst und in der Reagenzbehälter-Aufnahme angeordnet ist, wobei jeder der Reagenzbehälter eine der folgenden Reagenzien enthält:
- jeweils ein Reagenz enthaltend Phosphoramidite der Basen Adenin, Guanin, Cytosin und Thymin oder Uracil;
- ein Reagenz zur Detritylierung eines Endes eines Oligonukleotides, vorzugsweise enthaltend Dichloressigsäure, Trichloressigsäure oder Zinkbromid;
- ein Reagenz zur Aktivierung einer detritylierten 5'-OH-Gruppe eines Oligonukleotids und zur Koppelung der Phosphoramidite, vorzugsweise enthaltend Tetrazol;
- ein Reagenz zur Oxidierung eines Phosphittriesters, vorzugsweise eine Iod-Wasser Lösung umfassend eine schwache Base, insbesondere Pyridin, Lutidin oder Collidin, oder ein nichtwässriges Oxidationsmittel wie CSO;
- vorzugsweise zumindest ein Reagenz zur Blockierung nicht umgesetzter 5'-OH-Gruppen von aktivierten Oligonukleotiden, vorzugsweise Acetanhydrid und N-Methylimidazol oder DMAP;
wobei jeder Reagenzbehälter durch ein Versiegelungselement verschlossen ist.

Vorzugsweise umfasst der Reagenzbehälter-Träger weiters:
- einen Reagenzbehälter enthaltend eine Reagenz zur Abspaltung der Oligonukleotide von einem festen Träger und/oder zur Entfernung von Schutzgruppen der Oligonukleotide, vorzugsweise eine anorganische Base und/oder ein Amin, insbesondere Ammoniumhydroxid und/oder Methylamin oder Propylamin,
   und/oder
- zumindest einen Reagenzbehälter, vorzugsweise zumindest vier Reagenzbehälter, enthaltend Lösungsmittel, vorzugsweise Acetonitril.

Da es sich bei dem Reagenzbehälter-Träger um ein auswechselbares Verbrauchsteil handelt, welches zum Betrieb einer erfindungsgemäßen Vorrichtung notwendig ist, betrifft die Erfindung daher auch einen Reagenzbehälter-Träger zur Aufnahme in eine Reagenzbehälter-Aufnahme einer erfindungsgemäßen Vorrichtung zur Synthese von Oligonukleotiden, der Reagenzbehälter-Träger umfassend zumindest sechs, vorzugsweise zumindest sieben, Reagenzbehälter mit unterschiedlichen Reagenzien, wobei jeweils ein Reagenzbehälter eine der folgenden Reagenzien enthält:
- ein Reagenz enthaltend Phosphoramidite der Basen Adenin, Guanin, Cytosin, Thymin oder Uracil;
- ein Reagenz zur Detritylierung eines Endes eines Oligonukleotides, vorzugsweise enthaltend Dichloressigsäure, Trichloressigsäure oder Zinkbromid;
- ein Reagenz zur Aktivierung einer detritylierten 5'-OH-Gruppe eines Oligonukleotids und zur Koppelung der Phosphoramidite, vorzugsweise enthaltend Tetrazol;
- ein Reagenz zur Oxidierung eines Phosphittriesters, vorzugsweise eine Iod-Wasser Lösung umfassend eine schwache Base, insbesondere Pyridin, Lutidin oder Collidin, oder ein nichtwässriges Oxidationsmittel wie CSO;
- vorzugsweise zumindest ein Reagenz zur Blockierung nicht umgesetzter 5'-OH-Gruppen von aktivierten Oligonukleotiden, vorzugsweise Acetanhydrid und N-Methylimidazol oder DMAP;
wobei jeder Reagenzbehälter durch ein Versiegelungselement verschlossen ist.

Auf die einzelnen Schritte der Synthese und die Wirkung der einzelnen Reagenzien wird an anderer Stelle näher eingegangen. Die Menge der Reagenzien ist jedenfalls derart gewählt, dass sich zumindest eine, vorzugsweise zumindest zwei, insbesondere drei, vier oder fünf, Syntheseverfahren durchführen lassen, bevor der Reagenzbehälter-Träger durch einen neuen ersetzt werden muss.

Um die mikrofluidischen Ventile effizient in die fluidische Verbindung zwischen den fluidischen Anschlüssen zur Synthesekammer zu integrieren, ist in einer weiteren bevorzugten Ausführungsvariante vorgesehen, dass die fluidische Verbindung des mikrofluidischen Chips einen mit der Synthesekammer verbunden Hauptkanal und eine Mehrzahl von fluidischen Verbindungskanälen umfasst, wobei jeweils ein fluidischer Anschluss über einen fluidischen Verbindungskanal und ein mikrofluidisches Ventil mit dem Hauptkanal verbunden ist. Es ist dabei unerheblich an welcher Stelle das mikrofluidische Ventil in dem fluidischen Verbindungskanal angeordnet ist, auch eine endseitige oder mittige Anordnung ist beispielsweise denkbar.

Der Hauptkanal kann beispielsweise linear verlaufend angeordnet sein. Um den vorhandenen Bauraum optimal ausnutzen zu können und die Abmessungen des mikrofluidischen Chips so klein als möglich halten zu können, ist es vorteilhaft, wenn die Synthesekammer in einem Synthesekanal angeordnet ist, und der Hauptkanal zumindest zwei parallel zueinander verlaufende Äste aufweist, wobei sich die Äste in den Synthesekanal vereinen.

Um die Reagenzien nach jedem einzelnen Syntheseschritt aus der Synthesekammer entfernen zu können und einen Druckausgleich herzustellen, ist es vorteilhaft, wenn die Synthesekammer, vorzugsweise der Synthesekanal, mit einem als Auslass ausgebildeten fluidischen Auslassanschluss verbunden ist.

Insbesondere wenn Hauptkanal mehrere parallele Äste aufweist, die sich in den Synthesekanal vereinen, ist es vorteilhaft, wenn ein zweiter als Auslass ausgebildeter fluidischer Auslassanschluss endseitig an zumindest einem der Äste des Hauptkanals angeordnet ist. Durch den zweiten Auslassanschluss kann Reagenz in Richtung des zweiten Auslasses gefördert werden, ohne dass das Reagenz die Synthesekammer durchströmt. Insbesondere für die Heranführung der Reagenzien an die mikrofluidischen Ventile und eine nachfolgende Spülung ist eine solche Bauform vorteilhaft.

Um die Entsorgung der nicht umgesetzten Reagenzien bzw. deren Bestandteile zu erleichtern ist es vorteilhaft, wenn die Vorrichtung einen Abfallbehälter umfasst, welcher in der Betriebsposition an den zumindest einen als Auslass ausgebildeten fluidischen Auslassanschluss des mikrofluidischen Chips angeschlossen ist.

Generell ist es denkbar, dass die mikrofluidischen Ventile, insbesondere die Membranen der mikrofluidischen Ventile, an einer Außenfläche des mikrofluidische Chips angeordnet sind und unmittelbar an die Steuereinrichtung, insbesondere an das pneumatische System der Steuereinrichtung, angeschlossen sind.

In einer weiteren bevorzugten Ausführungsvariante der erfindungsgemäßen Vorrichtung ist vorgesehen, dass der mikrofluidische Chip mehrschichtig ausgebildet ist und eine erste, die fluidischen Anschlüsse aufweisende Trägerschicht sowie eine zweite Trägerschicht umfasst, wobei die zweite Trägerschicht zum Anschluss an die Steuereinrichtung ausgebildet ist und die mikrofluidischen Ventile zwischen erster und zweiter Trägerschicht angeordnet sind. Der mehrschichtige Aufbau bietet einerseits eine höhere strukturelle Stabilität des mikrofluidischen Chips. Dadurch wird die Verformung des Chips, die insbesondere beim Klemmen zwischen den Klemmflächen in der Betriebsposition auftritt, minimiert. Gleichzeitig sind die sensiblen mikrofluidischen Ventile, insbesondere die Membranen der mikrofluidischen Ventile, durch die beiden Trägerschichten vor Beschädigung geschützt.

Besonders einfach lässt sich die Aktuierung der mikrofluidischen Ventile durch gezielte Druckausübung auf das mikrofluidische Ventil über ein pneumatisches System erreichen. Dabei wird das mikrofluidische Ventil über das pneumatische System mit Druck beaufschlagt, um das mikrofluidische in eine geschlossene Ventilstellung zu versetzen in der die fluidische Verbindung unterbrochen ist. Wird kein Druck auf das mikrofluidische Ventil ausgeübt, so öffnet sich das mikrofluidische Ventil und die fluidische Verbindung ist freigegeben. Grundsätzlich können die mikrofluidischen Ventile Sperrelemente wie Stößel oder Klappen umfassen, jedoch ist es besonders vorteilhaft, wenn die mikrofluidischen Ventile eine Membran als Sperrelement aufweisen.

Daher sieht eine weitere besonders bevorzugte Ausführungsvariante der Erfindung vor, dass die Steuereinrichtung ein pneumatisches System umfasst und der mikrofluidische Chip pneumatische Anschlüsse zum Anschluss an das pneumatische System sowie eine Mehrzahl an pneumatischen Verbindungskanälen aufweist, wobei jeweils ein pneumatischer Anschluss über einen pneumatischen Verbindungskanal mit einem mikrofluidischen Ventil verbunden ist.

Unabhängig davon, ob der mikrofluidische Chip pneumatische Anschlüsse und Verbindungskanäle aufweist oder die mikrofluidischen Ventile unmittelbar an das pneumatische System der Steuereinrichtung angeschlossen sind, ist es vorteilhaft, wenn die Chip-Aufnahme pneumatische Steuerleitungskanäle zum Anschluss an Steuerleitungen des pneumatischen Systems der Steuereinrichtung aufweist, über welche Steuerleitungskanäle und Steuerleitungen in der Betriebsposition die mikrofluidischen Ventile des Chips über das pneumatische System aktuierbar sind. Ebenfalls kann vorgesehen sein, dass jede Steuerleitung bzw. jeder Steuerleitungskanal über ein mittels der Steuereinrichtung gesteuertes Ventil ansteuerbar ist, wobei die Ventile vorzugsweise in einem Ventilblock angeordnet sind. Um die für die Aktuierung der mikrofluidischen Ventile notwendige Dichtigkeit des Anschlusses des pneumatischen Systems an den mikrofluidischen Chip sicherzustellen, sind in einer weiteren Ausführungsvariante Dichtelemente vorgesehen. Besonders bevorzugt sind die Dichtelemente in der Betriebsposition zwischen der den fluidischen Anschlüssen abgewandten Seite des mikrofluidischen Chips und dem die Steuerleitungskanäle aufweisenden Anschlussabschnitt der Chip-Aufnahme angeordnet. Die Dichtelemente sind bevorzugt ringförmig ausgebildet, um die Steuerleitungskanäle abdichtend zu umgeben.

Zumindest ein Teil der zur Synthese der Oligonukleotide notwendigen Reagenzien darf nicht mit Sauerstoff in Kontakt kommen. Auch läuft ein Großteil der Synthesereaktionen in der Synthesekammer nur in einer Sauerstoff-freien Umgebung ab. Um sowohl die fluidische Verbindung im mikrofluidischen Chip als auch die Reagenzbehälter vor Sauerstoff, insbesondere aus der Umgebungsluft, zu schützen, ist in einer weiteren bevorzugten Ausführungsvariante der Erfindung vorgesehen, dass das pneumatische System der Steuereinrichtung, und/oder das mit den pneumatischen Verbindungsmitteln verbundene pneumatische System, ein Inertgas, vorzugsweise Argon, enthält. Vorteilhaft ist es, wenn die Vorrichtung nur ein pneumatisches System, nämlich das pneumatischen System der Steuereinrichtung aufweist, das pneumatischen System der Steuereinrichtung in der Betriebsposition an die pneumatischen Verbindungsmittel angeschlossen ist und das pneumatische System Inertgas enthält.

Wenn bei der Aktuierung der mikrofluidischen Ventile kein Austausch zwischen dem pneumatischen System der Steuereinrichtung und der fluidischen Verbindung des Chips stattfindet und das mit den pneumatischen Verbindungsmitteln verbundene pneumatische System ein separates, Inertgas enthaltendes, System darstellt, ist es grundsätzlich denkbar, dass das pneumatische System der Steuereinrichtung kein Inertgas enthält.

Um die fluidische Verbindung des mikrofluidischen Chips und die Synthesekammer trocknen zu können, ist es vorteilhaft, wenn das ein Inertgas enthaltende pneumatische System der Steuereinrichtung mit einem fluidischen Anschluss oder einem pneumatischen Anschluss des mikrofluidischen Chips verbunden ist.

Vorzugsweise umfasst die Vorrichtung einen Lösungsmittel, vorzugsweise Acetonitril, enthaltenden Lösungsmittelbehälter, welcher in der Betriebsposition an einem fluidischen Anschluss des mikrofluidischen Chips angeschlossen ist, um die fluidische Verbindung des mikrofluidischen Chips zu spülen.

Da es sich bei dem mikrofluidischen Chip um ein auswechselbares Verbrauchsteil handelt, welches zum Betrieb einer erfindungsgemäßen Vorrichtung notwendig ist, jedoch nur für die Durchführung einer begrenzten Anzahl an Synthesen, insbesondere einer einzigen Synthese, ausgelegt ist, betrifft die Erfindung daher auch einen mikrofluidischer Chip für eine erfindungsgemäße Vorrichtung zur Synthese von Oligonukleotiden umfassend:
- eine Synthesekammer zur Synthese der Oligonukleotide;
- eine Mehrzahl an über eine Steuereinrichtung betätigbaren, mikrofluidischen Ventilen;
- eine Mehrzahl an fluidischen Anschlüssen für fluidische Verbindungsmittel zur Zufuhr von Reagenzien;
- eine fluidische Verbindung, welche jeweils einen fluidischen Anschluss über ein mikrofluidisches Ventil mit der Synthesekammer verbindet;
wobei die fluidischen Anschlüsse auf einer Seite des mikrofluidischen Chips angeordnet sind und die mikrofluidischen Ventile auf einer den fluidischen Anschlüssen gegenüberliegenden Seite des mikrofluidischen Chips an die Steuereinrichtung anschließbar sind,
wobei in Abhängigkeit der Ventilstellung der mikrofluidischen Ventile Reagenzien von einem fluidischen Anschluss in Richtung der Synthesekammer förderbar sind.

Die eingangs erwähnte Aufgabe wird auch gelöst durch ein Verfahren zum Betreiben einer, vorzugsweise erfindungsgemäßen, Vorrichtung zur Synthese von Oligonukleotiden, die Vorrichtung umfassend
- eine Reagenzbehälter-Aufnahme auf der ein mehrere mit Reagenzien befüllte Reagenzbehälter umfassender, vorzugsweise erfindungsgemäßer, Reagenzbehälter-Träger angeordnet wird;
- einen, vorzugsweise erfindungsgemäßen, mikrofluidischen Chip mit einer Synthesekammer zur Synthese der Oligonukleotide, mit mikrofluidischen Ventilen und mit fluidischen Anschlüssen für die Zufuhr der Reagenzien,
- eine Steuereinrichtung, insbesondere umfassend ein pneumatisches System, zur Steuerung der mikrofluidischen Ventile;
- fluidische Verbindungsmittel zum Transport der Reagenzien aus den Reagenzbehältern zu den fluidischen Anschlüssen des mikrofluidischen Chips,
wobei folgende Schritte durchgeführt werden:
- Positionieren des mikrofluidischen Chips in der Vorrichtung, sodass die fluidischen Anschlüsse des mikrofluidischen Chips fluchtend zu den fluidischen Verbindungsmitteln angeordnet sind und die mikrofluidischen Ventile des mikrofluidischen Chips an die Steuereinrichtung anschließbar sind;
- Positionieren des mikrofluidischen Chips, insbesondere mittels einer über eine Aktuatoreinrichtung bewegbare Chip-Aufnahme, bis zwischen den fluidischen Anschlüssen des mikrofluidischen Chips und den fluidischen Verbindungsmitteln eine Verbindung hergestellt ist;
- Anschließen der mikrofluidischen Ventile an die Steuereinrichtung, insbesondere an das pneumatischen System der Steuereinrichtung;
- Positionieren der Reagenzbehälter-Aufnahme, insbesondere mittels der Aktuatoreinrichtung, bis über die fluidischen Verbindungsmittel eine Verbindung zwischen den Reagenzbehältern und den fluidischen Anschlüssen des mikrofluidischen Chips hergestellt ist, sodass in Abhängigkeit der Ventilstellung der mikrofluidischen Ventil Reagenzien aus den Reagenzbehältern in Richtung der Synthesekammer gefördert werden.

Für die Beschreibung des Aufbaus der erfindungsgemäßen Vorrichtung wird der guten Ordnung halber auf die vorhergehende Beschreibung verwiesen, sodass in der Folge nur die Verfahrensschritte näher erläutert werden.

Das Verfahren geht aus von der Bestückungsposition in der sich kein mikrofluidischer Chip in der Vorrichtung befindet und kein Reagenzbehälter-Träger in der Reagenzbehälter-Aufnahme angeordnet ist. In einem ersten Schritt wird ein Reagenzbehälter-Träger in der Reagenzbehälter-Aufnahme angeordnet und vorzugsweise so ausgerichtet, dass die fluidischen Verbindungsmittel, insbesondere die, vorzugsweise nadelförmigen, Transportleitungen, fluchtend mit den Reagenzbehältern angeordnet sind.

Danach wird ein mikrofluidischer Chip in die Vorrichtung eingelegt und so positioniert, dass seine fluidischen Anschlüsse fluchtend zu den fluidischen Verbindungsmitteln, insbesondere zu den Anschlussstücken, ausgerichtet sind. Diese Positionierung kann beispielsweise dadurch erreicht werden, dass der mikrofluidische Chip in eine zu den fluidischen Verbindungsmitteln ausgerichtete Chip-Aufnahme eingelegt wird. Ebenfalls kann die Positionierung derart erfolgen, dass der Chip in ein Aufnahmefach der Chip-Aufnahme eingelegt wird und das Aufnahmefach von der Bestückungsposition, in welcher die fluidischen Anschlüsse des mikrofluidischen Chips nicht mit den Verbindungsmitteln fluchten, entlang einer Verschieberichtung verschoben wird, bis die fluidischen Anschlüsse des mikrofluidischen Chips mit den Verbindungsmitteln fluchten, sodass der mikrofluidische Chip in einer Zwischenposition angeordnet ist. Zur Positionierung des Aufnahmefachs kann ein Anschlag vorgesehen sein. Um das Aufnahmefach in der Zwischenposition zu fixieren kann ein Verriegelungsmechanismus vorgesehen sein.

In einem weiteren Schritt wird der mikrofluidische Chip an die fluidischen Verbindungsmittel angeschlossen, indem der mikrofluidische Chip in der Vorrichtung bewegt wird. Vorzugsweise ist der mikrofluidische Chip in der Chip-Aufnahme angeordnet und die Chip-Aufnahme samt mikrofluidischem Chip wird in der Vorrichtung bewegt bzw. verfahren. Besonders bevorzugt wird die Chip-Aufnahme mittels der Aktuatoreinrichtung entlang einer linearen Bewegungsachse in Richtung der fluidischen Verbindungsmittel bewegt. Die fluidischen Verbindungsmittel können beispielsweise fest an einer Trägerplatte befestigt sein.

Der Anschluss der mikrofluidischen Ventile an die Steuereinrichtung kann beispielsweise über einen mit der Steuereinrichtung, insbesondere mit dem pneumatischen System der Steuereinrichtung, verbundenen Anschlussabschnitt erfolgen, welcher, vorzugsweise mittels der Aktuatoreinrichtung, in Richtung des mikrofluidischen Chips bewegt wird oder gemeinsam mit den fluidischen Verbindungsmitteln an den mikrofluidischen Chip angeschlossen werden.

Vorzugsweise weist die Chip-Aufnahme den Anschlussabschnitt zum Anschluss der Steuereinrichtung an die mikrofluidischen Ventile des mikrofluidischen Chips auf. In diesem Fall kann vorgesehen sein, dass die Chip-Aufnahme relativ zum mikrofluidischen Chip verschiebbar ist, sobald die fluidischen Anschlüsse auf den an der Trägerplatte fixierten fluidischen Verbindungsmitteln aufliegen. Die Chip-Aufnahme kann in diesem Fall weiter in Richtung der fluidischen Verbindungsmittel verschoben werden, bis der mikrofluidische Chip zwischen den fluidischen Verbindungsmitteln und dem Anschlussabschnitt geklemmt ist. In anderen Worten wird bleibt der mikrofluidische Chip durch das Aufliegen auf den fluidischen Anschlüssen ortsfest, während die Chip-Aufnahme weiter in Richtung der Trägerplatte bewegbar ist. Besonders bevorzugt weist der Anschlussabschnitt Dichtelemente und Zuführleitungen für das pneumatische System der Steuereinrichtung auf, wobei der mikrofluidische Chip zwischen den Dichtelementen und den Anschlussstücken der fluidischen Verbindungsmittel geklemmt ist.

In einem weiteren Schritt werden die Reagenzbehälter an die fluidischen Verbindungsmittel angeschlossen, indem die Reagenzbehälter-Aufnahme samt Reagenzbehälter in Richtung der fluidischen Verbindungsmittel bewegt wird. Vorzugsweise erfolgt die Bewegung mittels der Aktuatoreinrichtung entlang der linearen Bewegungsachse. Insbesondere werden die Verschlusselemente der Reagenzbehälter bei der Bewegung des Reagenzbehälter-Trägers von den fluidischen Verbindungsmitteln, insbesondere von den nadelförmigen Transportleitungen, durchdrungen, sodass sich die Enden der fluidischen Verbindungsmittel jeweils in einem Reagenzbehälter befinden.

Während es vorteilhaft ist, wenn die Schritte fluchtendes Ausrichten, Anschluss der fluidischen Verbindungsmittel, Anschluss der Steuereinrichtung und Anschluss der Reagenzbehälter in dieser Reihenfolge durchgeführt werden, sind die einzelnen Schritte in alternativen Ausführungsvarianten untereinander austauschbar. Beispielsweise können die Reagenzbehälter über mehrere Synthesen angeschlossen bleiben, während für jede Synthese der mikrofluidische Chip getauscht wird und die dafür erforderlichen Schritte durchgeführt werden.

Sobald der mikrofluidische Chip an die fluidischen Verbindungsmittel und die Steuereinrichtung, insbesondere an das pneumatische System der Steuereinrichtung, angeschlossen ist und die fluidischen Verbindungsmittel die Reagenzbehälter des Reagenzbehälter-Trägers mit dem mikrofluidischen Chip verbinden, befindet sich die Vorrichtung in der Betriebsposition in der die Synthese von Oligonukleotiden durch über die mikrofluidischen Ventile gesteuerte Förderung der Reagenzien in die Synthesekammer durchgeführt wird.

Grundsätzlich sind verschiedenste technische Möglichkeiten zur Förderung der Reagenzien aus den Reagenzbehältern über die fluidischen Verbindungsmittel in Richtung des mikrofluidischen Chips denkbar, beispielsweise Pumpsysteme oder Kolbensysteme.

Eine bevorzugte Ausführungsvariante der Erfindung sieht vor, dass die Reagenzbehälter mit einem pneumatischen System, insbesondere dem pneumatischen System der Steuereinrichtung, vorzugsweise über pneumatische Verbindungsmittel, verbunden sind und über den Gasdruck des pneumatischen Systems Reagenzien aus den Reagenzbehältern in Richtung der Synthesekammer transportiert werden. Durch die Förderung der Reagenzien mittels des Gasdrucks des pneumatischen Systems ist die Anzahl der mechanisch beweglichen Elemente reduziert, was zu einem verringerten Verschleiß und einer geringen Fehleranfälligkeit führt. Besonders bevorzugt umfasst die Vorrichtung nur das pneumatische System der Steuereinrichtung, welches sowohl zur Aktuierung der mikrofluidischen Ventile als auch zur Förderung der Reagenzien dient. Die pneumatischen Verbindungsmittel sind dabei bevorzugt parallel zu den fluidischen Verbindungsmitteln angeordnet, sodass bei der Bewegung der Reagenzbehälter-Aufnahme die Enden der pneumatischen Verbindungsmittel ebenfalls die Versiegelungselemente der Reagenzbehälter durchdringen und die Enden jeweils in einem der Reagenzbehälter angeordnet sind.

In einer weiteren bevorzugten Ausführungsvariante des erfindungsgemäßen Verfahrens ist vorgesehen, dass der mikrofluidische Chip zumindest einen als Auslass ausgebildeten fluidische Auslassanschluss, vorzugsweise zwei als Auslass ausgebildete fluidische Auslassanschlüsse, aufweist und die mikrofluidischen Ventile über die Steuereinrichtung einzeln aktuiert werden, um ein Reagenz von einem mit einem Reagenzbehälter verbundenen fluidischen Anschluss in Richtung des zumindest einen als Auslass ausgebildeten Auslassanschlusses zu fördern, indem die entsprechenden mikrofluidischen Ventile, welche die beiden fluidischen Anschlüsse steuern, geöffnet werden. Die Förderung eines Reagenz erfolgt also durch gleichzeitiges Öffnen jenes mikrofluidischen Ventils welches den entsprechenden fluidischen Anschluss des Reagenz steuert und jenes mikrofluidischen Ventils, welches einen der Auslassanschlüsse steuert. Die übrigen mikrofluidischen Ventile sind dabei in der Regel geschlossen. Somit strömt das Reagenz von dem fluidischen Anschluss über die fluidische Verbindung, insbesondere über einen Transportkanal und den Hauptkanal, zu dem Auslassanschluss, der bevorzugt mit einem Abfallbehälter verbunden ist. Einer der Auslassanschlüsse befindet sich in Strömungsrichtung nach der Synthesekammer, um eine Durchströmung der Synthesekammer mit Reagenz zu ermöglichen.

Vorteilhaft ist es jedoch, wenn der mikrofluidische Chip zumindest zwei, vorzugsweise genau zwei, als Auslass ausgebildete Auslassanschlüsse aufweist, wobei zumindest einer der Auslassanschlüsse in Strömungsrichtung hinter der Synthesekammer angeordnet ist und zumindest einer der Auslassanschlüsse derart angeordnet ist, dass die Reagenzien beim Öffnen der zugeordneten Ventile nicht durch die Synthesekammer strömen.

Während des Synthesevorgangs werden über die Steuerung der mikrofluidischen Ventile die Reagenzien in kleiner Menge in die Synthesekammer gefördert. Für die Durchführung der Synthese ist es daher notwendig einen allgemeinen Ausgangszustand herzustellen, in dem ohne nennenswerte Dilation, vorzugsweise unmittelbar, durch Freigabe eines der mikrofluidischen Ventile Reagenz über die fluidische Verbindung in Richtung der Synthesekammer strömt. Daher ist es notwendig, die Reagenzien an die mikrofluidischen Ventile heranzuführen, nachdem die Vorrichtung in die Betriebsposition gebracht wurde. Zu diesem Zweck wird jeweils ein mikrofluidisches Ventil, das einen fluidischen Anschluss für ein Reagenz aus einem Reagenzbehälter steuert, geöffnet, sodass Reagenz aus dem Reagenzbehälter über das entsprechende fluidische Verbindungsmittel, den fluidischen Anschluss bis zum mikrofluidischen Ventil strömt. In der Regel strömt das Reagenz durch das mikrofluidische Ventil, sodass sich ein Teil des Reagenz im Hauptkanal der fluidischen Verbindung befindet. Die Öffnungsdauer der mikrofluidischen Ventile ist in der Steuereinrichtung hinterlegt und kann beispielsweise unter Berücksichtigung des Gasdrucks, des Förderwegs des fluidischen Verbindungsmittels, des Durchmessers des fluidischen Verbindungsmittels und/oder der Viskosität der Reagenz ausgelegt werden.

Um zu verhindern, dass durch das mikrofluidische Ventil geströmtes Reagenz nach der Heranführung im Hauptkanal verbleibt, wird der mikrofluidische Chip bzw. die fluidische Verbindung nachfolgend mit Lösungsmittel, vorzugsweise Acetonitril, durchströmt, indem das entsprechende mikrofluidische Ventil geöffnet wird, welches den fluidischen Anschluss steuert, der mit dem Lösungsmittel, vorzugsweise mit einem Lösungsmittelbehälter, verbunden ist. In einem weitern Schritt wird der mikrofluidische Chip bzw. die fluidische Verbindung getrocknet, um Reste des Lösungsmittel zu entfernen. Dabei wird jenes mikrofluidische Ventil geöffnet, welches die Zuführung von Inertgas ermöglicht. Vorzugsweise stammt das Inertgas aus einem pneumatischen System der Vorrichtung, insbesondere aus dem pneumatischen System der Steuereinrichtung.

Vorzugweise sind die Anschlüsse für das Lösungsmittel und für das Inertgas derart in der fluidischen Verbindung angeordnet, dass alle übrigen fluidischen Anschlüsse in Strömungsrichtung nach den beiden vorgenannten Anschlüssen angeordnet sind. Somit wird sichergestellt, dass beim Spülen und Trocknen alle Bereiche der fluidischen Verbindung durchströmt werden können und alle Reagenzien entfernt werden können.

Diese Schritte werden für jeden Reagenzbehälter wiederholt, der ein für die Synthese notwendiges Reagenz enthält. Daher ist einer besonders bevorzugten Ausführungsvariante des erfindungsgemäßen Verfahrens vorgesehen, dass vor dem Beginn der Synthese eines Oligonukleotids folgende Schritte durchgeführt werden:
- Öffnen eines mikrofluidischen Ventils, das einen fluidischen Anschluss für die Zuführung von Reagenz aus einem Reagenzbehälter steuert;
- Schließen des geöffneten mikrofluidischen Ventils, wenn das mikrofluidische Ventil vom Reagenz durchströmt ist;
- Spülen des mikrofluidischen Chips, vorzugsweise eines Hauptkanals des mikrofluidischen Chips, durch Öffnen eines mikrofluidischen Ventils, das einen fluidischen Anschluss für die Zuführung von einem Lösungsmittel, vorzugsweise Acetonitril, steuert;
- vorzugsweise Trocknen des mikrofluidischen Chips, insbesondere eines Hauptkanals des mikrofluidischen Chips, durch Öffnen eines mikrofluidischen Ventils welches die Zuführung eines Inertgases, vorzugsweise von Argon, steuert;
- Wiederholen der vorhergehenden Schritte bis jedes Reagenz aus den mit den fluidischen Anschlüssen des mikrofluidischen Chips verbundenen Reagenzbehältern an das jeweilige mikrofluidische Ventil des entsprechenden fluidischen Anschlusses herangeführt ist.

Nach dem Ende einer Synthese werden die Reagenzien durch Öffnen der entsprechenden mikrofluidischen Ventile, und vorzugsweise gleichzeitigem Öffnen des mikrofluidischen Ventils welches die Zuführung eines Inertgases, vorzugsweise von Argon, steuert, aus dem mikrofluidischen Chip und den Transportleitungen der fluidischen Verbindungsmittel wieder zurück in die Reagenzbehälter gefördert. Nachfolgend können die eingangs beschriebenen Schritte zum Betrieb in umgekehrter Reihenfolge durchgeführt werden, um die Vorrichtung wieder in die Bestückungsposition zu bringen.

Um beim Heranführen der Reagenzien, sowie beim Spülen und Trocknen der fluidischen Verbindung zu verhindern, dass Reagenzien in die Synthesekammer gelangen und dort eine Reaktion stattfindet, ist es vorteilhaft, wenn jeweils jenes mikrofluidische Ventil geöffnet wird, welches einen der als Auslassanschlüsse steuert, bei dem die Reagenzien nicht durch die Synthesekammer strömen. In anderen Worten wird nicht jener Auslassanschluss freigegeben, der in Strömungsrichtung hinter der Synthesekammer angeordnet ist.

In der Folge sollen nun die Syntheseschritte eines Synthesezyklus besprochen werden, die zur Koppelung eines Nukleotids an das Ende einer Teilsequenz eines Oligonukleotids bzw. als erstes Nukleotid an ein Linker-Molekül eines Trägermediums notwendig sind. Die Abfolge der Syntheseschritte und der dafür verwendeten Reagenzien ist an sich bekannt. Es versteht sich dabei von selbst, dass in der Synthesekammer eine Vielzahl an Oligonukleotiden derselben Nukleotidsequenz gleichzeitig synthetisierbar ist. Jedes Oligonukleotid startet an einem Linker-Molekül eines Trägermediums und wird mit jedem Syntheseschritt um ein Nukleotid erweitert, welches an das Ende der Kette gekoppelt wird. Die 5'-OH-Gruppe des Oligonukleotids ist mit einer säurelabilen Dimethoxytrityl-Schutzgruppe (4,4'-Dimethoxytrityl - DMT) versehen.

Zuerst wird der Synthesekammer ein Reagenz zur Detritylierung eines Endes eines eine Teilsequenz aufweisenden Oligonukleotids bzw. zur Detrytilierung des Linker-Moleküls aus dem entsprechenden Reagenzbehälter zugeführt. Dadurch wird die DMT-Schutzgruppe entfernt, sodass ein weiteres Nukleotid an die freie 5'-OH-Gruppe angekoppelt werden kann. Bei dem Reagenz zur Detritylierung kann es sich um eine saure Lösung, handeln. Beispielsweise ist eine Lösung enthaltend 2% Trichloressigsäure oder 3% Dichloressigsäure in einem inerten Lösungsmittel wie Acetonitril, Dichlormethan oder Toluol denkbar. Dieser Schritt wird auch als Deblocking-Schritt bezeichnet.

Im nächsten Schritt wird die Nukleotidkette an der detritylierten, freien 5'-OH-Gruppe um ein Nukleotid, also entweder Adenin, Guanin, Cytosin oder Thymin für einen DNA Strang oder Adenin, Guanin, Cytosin oder Uracil für einen RNA Strang, verlängert. Dazu wird der Synthesekammer abwechselnd ein Reagenz zur Aktivierung der freien 5'-OH-Gruppe und ein Reagenz enthaltend Phosphoramidite des entsprechenden Nukleotids zugeführt. Die Phosphoramidite werden in einem Lösungsmittel, insbesondere Acetonitril, gelöst zugeführt. Die Aktivierung der 5'-OH-Gruppe kann beispielsweise mittels einer 0,2-0,7 molaren Lösung eines sauren Azol-Katalysators erreicht werden, insbesondere durch 1H-Tetrazol, 5-Ethylthio-1H-Tetrazol, 2-Benzylthiotetrazol oder 4,5-Dicyanoimidazol. Dabei koppelt das Nukleotid an der freien 5'-OH-Gruppe des Oligonukleotids an, während der Phosphoramidit-Rest abgespalten wird. Die 5'-OH-Gruppe des neu gekoppelten Nukleotids ist wiederum durch eine DMT-Schutzgruppe geschützt. Dieser Schritt wird auch als Coupling-Schritt bezeichnet

Vorteilhafter Weise wird der Synthesekammer im nächsten Schritt ein Reagenz zur Blockierung nicht umgesetzter 5'-OH-Gruppen zugeführt. Da bei dem vorhergehenden Schritt in der Regel 0,1% bis 1% der freien 5'-OH-Gruppen der einzelnen Oligonukleotid-Stränge nicht umgesetzt werden, würden sich bei Fortsetzung der Synthese Oligonukleotide mit Deletationsmutationen ausbilden, die sich nur geringfügig von den zu synthetisierenden Oligonukleotiden unterscheiden und schwierig auszufiltern sind. Werden die nicht umgesetzten 5'-OH-Gruppen jedoch blockiert, in der Regel durch Acetylierung, so wird die Kettenbildung dauerhaft unterbrochen und die unterbrochenen Oligonukleotide weisen in der Regel eine wesentlich geringere Länge auf als die zu synthetisierenden Oligonukleotide. Dadurch lassen sich die unterbrochenen Oligonukleotide in einfacher Art und Weise aus dem Produkt der Synthese entfernen. Beispielsweise wird die Blockierung nicht umgesetzter 5'-OH-Gruppen durch eine Mischung aus Acetanhydrid, 1-Methylimidazol und/oder 4-Dimethylaminopyridin (DMAP) als Katalysator erreicht. Dieser Schritt wird auch als Capping-Schritt bezeichnet.

Als letzter Schritt eines Synthesezyklus erfolgt die Oxidation einer Phosphittriester-Bindung die zwischen dem neu gekoppelten Nukleotid und der entsprechenden 5'-OH-Gruppe des Oligonukleotids ausgebildet ist. Das Reagenz oxidiert die Phosphittriester-Bindung in einen vierfach koordinierten Phosphotriester, einem geschützten Vorläufer der natürlich vorkommenden Phosphatdiester Internukleosidbindung. Dadurch wird die Bindung zwischen dem angekoppelten Nukleotid und der entsprechenden 5'-OH-Gruppe stabilisiert. Für die Oxidation kann beispielsweise eine Iod-Wasser Lösung umfassend eine schwache Base, insbesondere Pyridin, Lutidin oder Collidin eingesetzt werden oder unter wasserfreien Bedingungen mittels (1S)-(+)-(10-Camphersulfonyl)-oxaziridin (CSO) oder tert-Butylhydroperoxid (TBHP). Dieser Schritt wird als Oxidations-Schritt bezeichnet.

Die drei, vorzugsweise vier, Schritte eines Synthesezyklus werden in der Reihenfolge der Nukleotidsequenz des zu synthetisierenden Oligonukleotids so oft wiederholt, bis das Oligonukleotid die vorbestimmte Länge und Sequenz aufweist.

Daher ist in einer besonders bevorzugten Ausführungsvariante des erfindungsgemäßen Verfahrens vorgesehen, dass zur Synthese eines Oligonukleotids, vorzugsweise eines DNA-Strangs, folgende Schritte durchgeführt werden:
- Öffnen eines mikrofluidischen Ventils, das einen fluidischen Anschluss für die Zuführung einer Reagenz zur Detritylierung einer mit einer Dimethoxytrityl-Schutzgruppe versehenen 5'-OH-Gruppe des Oligonukleotides oder zur Detritylierung eines Linker-Moleküls eines Trägermediums aus einem Reagenzbehälter steuert;
- Abwechselndes Öffnen eines mikrofluidischen Ventils, das einen fluidischen Anschluss für die Zuführung einer Reagenz zur Aktivierung der detritylierten 5'-OH-Gruppe aus einem Reagenzbehälter steuert und eines mikrofluidischen Ventils, das einen fluidischen Anschluss für die Zuführung einer Reagenz enthaltend Phosphoramidite der Basen Adenin oder Guanin oder Cytosin oder Thymin oder Uracil aus einem Reagenzbehälter steuert;
- vorzugsweise Öffnen zumindest eines mikrofluidischen Ventils, das einen fluidischen Anschluss für die Zuführung einer Reagenz zur Blockierung nicht umgesetzter 5'-OH-Gruppen aus einem Reagenzbehälter steuert;

- Öffnen eines mikrofluidischen Ventils, das einen fluidischen Anschluss für die Zuführung einer Reagenz zur Oxidation einer Phosphittriester-Bindung aus einem Reagenzbehälter steuert.
- Wiederholen der vorhergehenden Schritte.

Vorzugsweise wird der mikrofluidische Chip bzw. die fluidische Verbindung nach jedem Schritt des Synthesezyklus, wie zuvor beschrieben, gespült und/oder getrocknet. Besonders vorteilhaft ist es dabei, wenn während dem Spülen und Trocknen die mikrofluidischen Ventile aller als Auslass ausgebildeten fluidischen Auslassanschlüsse abwechselnd geöffnet und geschlossen werden, wobei in der Regel jeweils nur eines der mikrofluidischen Ventile gleichzeitig geöffnet ist.

Nach dem Abschluss der Synthese sind unterschiedliche Vorgehensweise denkbar: Einerseits kann die Vorrichtung, wie zuvor beschrieben, zurück in die Bestückungsposition gebracht werden und der das synthetisierte Oligonukleotid enthaltende mikrofluidischer Chip wird entnommen. In einem separaten Schritt wird das synthetisierte Oligonukleotid aus der Synthesekammer entfernt und von den Linker-Molekülen getrennt und die Schutzgruppen werden entfernt.

Vorteilhaft ist es jedoch, wenn die Entfernung der Schutzgruppen und die Loslösung der Oligonukleotide von den Linker-Molekülen des Trägermediums noch in der Betriebsposition erfolgt und das synthetisierte Oligonukleotid als Endprodukt aus einem Produktsammelbehälter der Vorrichtung entnommen werden kann. Daher ist in einer weiteren bevorzugten Ausführungsvariante der Erfindung vorgesehen, dass nach dem Abschluss der Synthese folgender Schritt durchgeführt wird:
- Öffnen zumindest eines mikrofluidischen Ventils, das einen fluidischen Anschluss für die Zuführung einer Reagenz zur Abspaltung der Oligonukleotide von den Linker-Molekülen und/oder einer Reagenz zur Entfernung der Schutzgruppen steuert
- Gleichzeitiges Öffnen eines mikrofluidischen Ventils, das einen fluidischen Anschluss für einen Produktsammelbehälter steuert. Dieser Schritt wird als Cleavage/Deprotection bezeichnet.

Vorzugsweise sind zwei fluidische Anschlüsse für die Zuführung einer Reagenz zur Abspaltung der Oligonukleotide von den Linker-Molekülen und/oder einer Reagenz zur Entfernung der Schutzgruppen vorgesehen, wobei einer der Anschlüsse in Strömungsrichtung vor der Synthesekammer und der andere Anschluss in Strömungsrichtung hinter der Synthesekammer angeordnet ist. Dadurch kann das Ausspülvolumen vergrößert werden.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine dreidimensionale Ansicht einer erfindungsgemäßen Vorrichtung zur Synthese von Oligonukleotiden in einer Bestückungsposition;
- Fig. 2: eine Seitenansicht der Vorrichtung in der Bestückungsposition;
- Fig. 3: eine Seitenansicht der Vorrichtung in einer Zwischenposition;
- Fig. 4: eine Seitenansicht der Vorrichtung in einer Betriebsposition;
- Fig. 5: eine Frontalansicht der Vorrichtung in der Betriebsposition;
- Fig. 6: eine Schnittansicht der Vorrichtung gemäß Linie AA in Fig. 5;
- Fig. 7: eine vergrößerte Detailansicht der Vorrichtung gemäß Bereich B in Fig. 6;
- Fig. 8: eine vergrößerte Detailansicht der Vorrichtung gemäß Bereich C in Fig. 7;
- Fig. 9: eine vergrößerte Detailansicht der Vorrichtung gemäß Bereich C in Fig. 7 in der Zwischenposition;
- Fig. 10: das Layout einer ersten Ausführungsvariante eines erfindungsgemäßen mikrofluidischen Chips;
- Fig. 11: eine vergrößerte Detailansicht einer zweiten Ausführungsvariante der Vorrichtung für eine zweite Ausführungsvariante des mikrofluidischen Chips analog zu Fig. 8;
- Fig. 12: eine vergrößerte Detailansicht der Vorrichtung in der Zwischenposition für eine zweite Ausführungsvariante des mikrofluidischen Chips analog zu Fig. 9;
- Fig. 13: das Layout einer zweiten Ausführungsvariante des erfindungsgemäßen mikrofluidischen Chips;
- Fig. 14: das Layout einer Ausführungsvariante eines Reagenzbehälter-Trägers.

### WEGE ZUR AUSFÜHRUNG DER ERFINDUNG

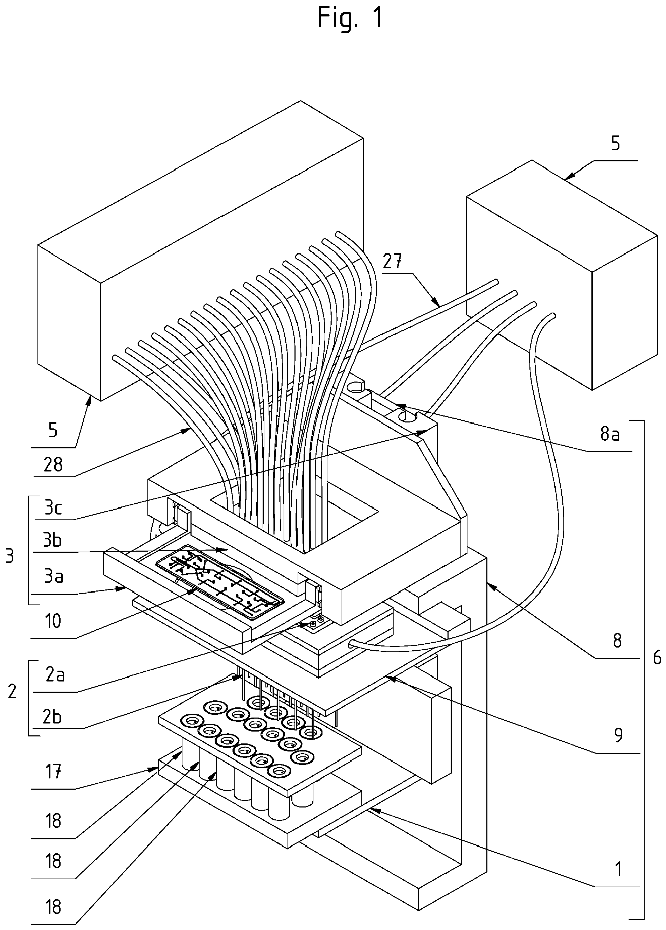

Figur 1 zeigt eine erste Ausführungsvariante einer erfindungsgemäßen Vorrichtung zur Synthese von Oligonukleotiden in einer Bestückungsposition. Die Vorrichtung umfasst im vorliegenden Ausführungsbeispiel eine Reagenzbehälter-Aufnahme 1, eine Chip-Aufnahme 3, sowie ein Rahmengestell 8 und eine Trägerplatte 9. Zwischen der Chip-Aufnahme 3 und der Reagenzbehälter-Aufnahme 1 sind fluidische Verbindungsmittel 2 angeordnet, welche an der Trägerplatte 9 befestigt sind.

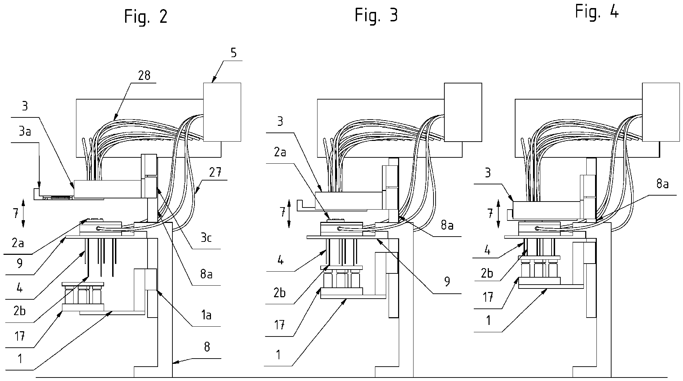

In der dargestellten Bestückungsposition ist die Reagenzbehälter-Aufnahme 1 mit einem Reagenzbehälter-Träger 17 bestückbar, der mehrere als Einheit verbundene Reagenzbehälter 18 umfasst, wobei die Reagenzbehälter 18 Reagenzien zur Synthese der Oligonukleotide enthalten. In der dargestellten Bestückungsposition sind die Reagenzbehälter 18 nicht fest mit der Vorrichtung verbunden, sodass der Reagenzbehälter-Träger 17 aus der Reagenzbehälter-Aufnahme 1 entfernbar ist bzw. in die Reagenzbehälter-Aufnahme 1 einführbar ist (vergleiche Figur 2 und 3). In anderen Worten ist der Reagenzbehälter-Träger 17 in der Bestückungsposition durch einen als Ersatzteil fungierenden, baugleichen Reagenzbehälter-Träger 17 auswechselbar.

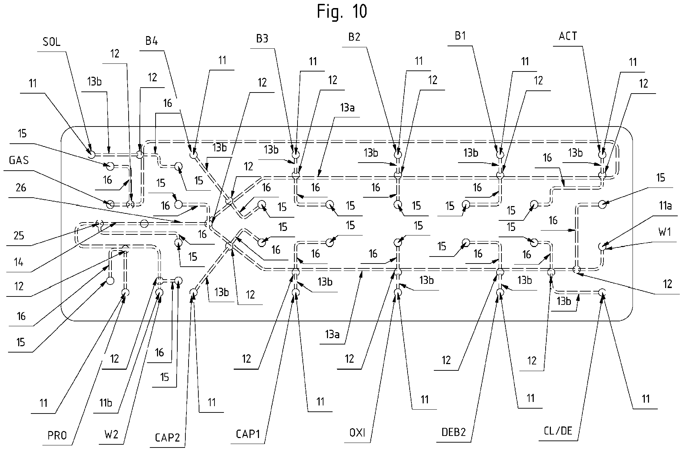

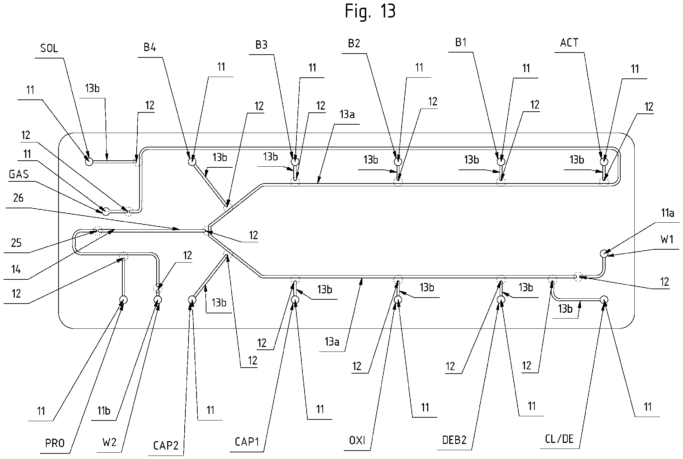

In der dargestellten Bestückungsposition ist die Chip-Aufnahme 3 mit einem mikrofluidischen Chip 10 aus Kunststoff bestückbar, welcher mikrofluidische Chip 10 eine Synthesekammer 14 aufweist, in der die Synthese der Oligonukleotide stattfindet (siehe Figuren 10 und 13). Wie in der Figur deutlich zu erkennen ist, ist der mikrofluidische Chip 10 in der Bestückungsposition nicht fest mit der Vorrichtung verbunden, sodass der mikrofluidische Chip 10 in die Vorrichtung einlegbar bzw. aus der Vorrichtung entnehmbar ist. In anderen Worten ist der der mikrofluidische Chip 10 in der Bestückungsposition durch einen als Ersatzteil fungierenden, baugleichen der mikrofluidische Chip 10 auswechselbar. Die Chip-Aufnahme 3 weist im vorliegenden Ausführungsbeispiel ein ladenartig ausziehbares Aufnahmefach 3a auf, in welches der mikrofluidische Chip 10 einlegbar ist.

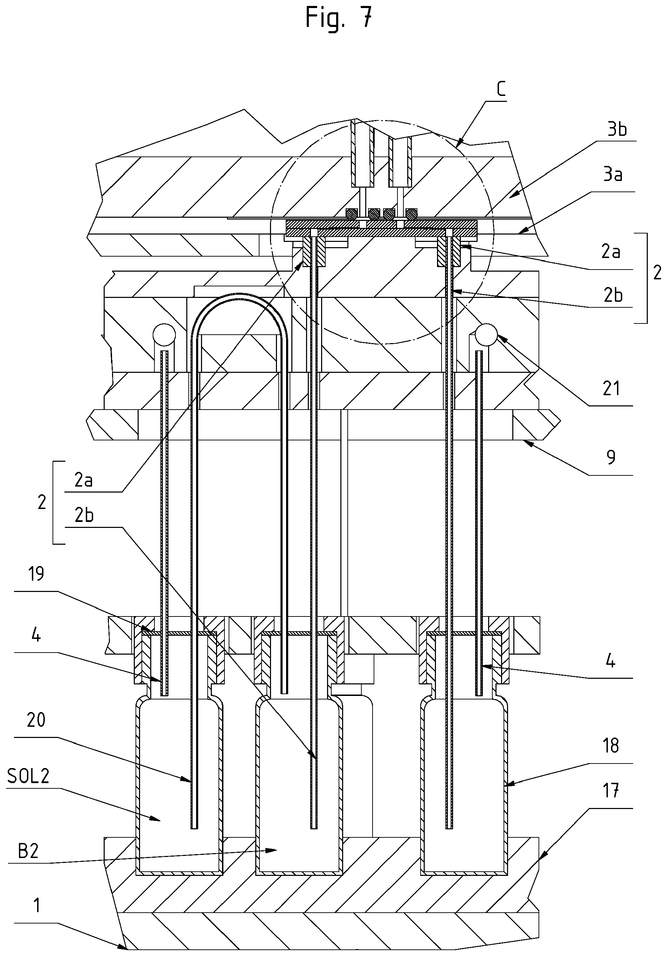

Wie insbesondere in den Figuren 7 bis 13 zu dargestellt ist, weist der mikrofluidische Chip 10 auf einer Seite eine Mehrzahl an fluidischen Anschlüssen 11 auf. Die fluidischen Anschlüsse 11 sind mit fluidischen Verbindungsmitteln 2 verbindbar, welche fluidischen Verbindungsmittel 2 in einer Betriebsposition (siehe insbesondere Fig. 4, 7 und 11) jeweils einen Reagenzbehälter 18 mit einem fluidischen Anschluss 11 des mikrofluidischen Chips 10 verbinden, sodass Reagenzien aus den Reagenzbehältern 18 in Richtung der Synthesekammer 14 förderbar sind. Die fluidischen Verbindungsmittel 2 sind zwischen der Chip-Aufnahme 3 und der Reagenzbehälter-Aufnahme 1 angeordnet.

Neben den fluidischen Anschlüssen 11 weist der mikrofluidische Chip 10 mikrofluidische Ventile 12 auf, welche über eine schematisch dargestellte Steuereinrichtung 5 steuerbar sind. Die mikrofluidischen Ventile 12 des mikrofluidische Chips 10 sind an die Steuereinrichtung 5 anschließbar, wobei die mikrofluidischen Ventile 12 in der Betriebsposition über jeweils eine Steuerleitung 28 an die Steuereinrichtung 5 angeschlossen sind. Im vorliegenden Ausführungsbeispiel sind die die mikrofluidischen Ventile 12 auf einer den fluidischen Anschlüssen 11 gegenüberliegenden Seite des mikrofluidischen Chips 10 an die Steuereinrichtung 5 anschließbar.

Um die mikrofluidischen Ventile 12 an die Steuereinrichtung 5 anschließen zu können, weist die Chip-Aufnahme 3 einen Anschlussabschnitt 3b auf, welcher in der Betriebsposition die Steuereinrichtung 5 mit dem mikrofluidischen Chip 10 verbindet.

Um den mikrofluidischen Chip 10 samt Chip-Aufnahme 3, die Reagenzbehälter-Aufnahme 1 und die fluidischen Verbindungsmittel 2 von der Bestückungsposition in die Betriebsposition zu bringen, ist in der vorliegenden Ausführungsvariante der Vorrichtung eine Aktuatoreinrichtung 6 vorgesehen, welche das Rahmengestell 8 und eine am Rahmengestell 8 befestigte Schiene 8a umfasst. Die Trägerplatte 9 ist dabei fest am Rahmengestell 8 angebracht, während die Chip-Aufnahme 3 und die Reagenzbehälter-Aufnahme 1 translatorisch verschiebbar an der Schiene 8a angebracht sind. Jedes der fluidischen Verbindungsmittel 2 umfasst ein Anschlussstück 2a zum Anschluss an die fluidischen Anschlüsse 11 des mikrofluidischen Chips 10 und eine nadelförmige Transportleitung 2b zum Transport der Reagenzien aus den Reagenzbehälter 18. Die Aktuatoreinrichtung 6 umfasst vorzugsweise zumindest eine elektrische Antriebseinheit, beispielsweise einen Elektromotor oder einen Linearmotor, und/oder einen Spindeltrieb.

Die Figuren 2 bis 4 zeigen den Bewegungsablauf der Vorrichtung von der Bestückungsposition in die Betriebsposition.

In Fig. 2 ist das Aufnahmefach 3a ausgezogen und der mikrofluidische Chip 10 in das Aufnahmefach 3a eingelegt. Das Aufnahmefach 3a ist in Richtung der fluidischen Verbindungsmittel 2 geöffnet, wobei der mikrofluidische Chip 10 in einem Randbereich auf dem Aufnahmefach 3a aufliegt. Dabei ist der mikrofluidische Chip 10 vorzugsweise nur in einer Orientierung in das Aufnahmefach 3a einlegbar und ist fix im Aufnahmefach 3a positioniert. Die Chip-Aufnahme 3 weist einen Verbindungsabschnitt 3c auf, mittels welchem die Chip-Aufnahme 3 mit der Schiene 8a verbunden ist. Weiters ist dargestellt, wie ein Reagenzbehälter-Träger 17 in der Reagenzbehälter-Aufnahme 1 positioniert wird. Vorteilhaft ist es dabei, wenn die Reagenzbehälter-Aufnahme 1 Positioniermittel, wie Positioniernasen, Schienen oder Anschläge, aufweist, um sicherzustellen, dass der Reagenzbehälter-Träger 17 nur in einer Orientierung in die Reagenzbehälter-Aufnahme 1 einführbar ist und/oder dass der Reagenzbehälter-Träger 17 in einfacher Art und Weise in eine vordefinierte Relativposition bezogen auf die fest angebrachten fluidischen Verbindungsmittel 2 bringbar ist. Die Reagenzbehälter-Aufnahme 1 weist ebenfalls einen Verbindungsabschnitt 1a auf, mittels welchem die Reagenzbehälter-Aufnahme 1 mit der Schiene 8a verbunden ist.

Die Aktuatoreinrichtung 6 ermöglicht eine Positionierung von Chip-Aufnahme 3, Reagenzbehälter-Aufnahme 1 und fluidischen Verbindungsmitteln 2 entlang einer linearen Bewegungsachse 7. Im vorliegenden Ausführungsbeispiel wird dies dadurch erreicht, dass die Schiene 8a parallel zur Bewegungsachse 7 ausgerichtet ist.

Im vorliegenden Ausführungsbeispiel erfolgt die Förderung der Reagenzien mittels Gasdruck, welcher aus einem pneumatischen System stammt. Dabei handelt es sich bei dem im pneumatischen System befindlichen Gas um ein Inertgas, wobei im vorliegenden Ausführungsbeispiel Argon verwendet wird. Zur Verbindung der Reagenzbehälter 18 mit dem pneumatischen System sind pneumatische Verbindungsmittel 4 vorgesehen, welche jeweils als nadelförmige Transportleitung ausgebildet sind. Die pneumatische Verbindungsmittel 4 sind, vorzugsweise parallel zu den fluidischen Verbindungsmitteln 2 verlaufend, fest an der Trägerplatte 9 angebunden.

In Figur 3 ist eine Zwischenposition dargestellt, in welcher das ladenartige Aufnahmefach 3a in die Chip-Aufnahme 3 eingeschoben ist, wobei die Einschiebe-Richtung normal zur linearen Bewegungsachse 7 erfolgt. Dabei sind die fluidischen Anschlüsse 11 des in das Aufnahmefach 3a eingelegten mikrofluidischen Chips 10 fluchtend zu den fluidischen Verbindungsmitteln 2, genauer zu deren Anschlussstücken 2a, ausgerichtet, sodass bei einer Verschiebung der Chip-Aufnahme 3 entlang der Bewegungsachse 7 in Richtung der Trägerpatte 9 eine Verbindung zwischen den fluidischen Anschlüssen 11 und den fluidischen Verbindungsmitteln 2, genauer deren Anschlussstücken 2a, herstellbar ist.

Der Reagenzbehälter-Träger 17 ist in der Reagenzbehälter-Aufnahme 1 derart positioniert, dass die einzelnen Reagenzbehälter 18 einerseits fluchtend zu den fluidischen Verbindungsmitteln 2, insbesondere deren Transportleitungen 2b, und andererseits fluchtend zu den als Transportleitungen ausgebildeten pneumatischen Verbindungsmitteln 4 ausgerichtet sind, sodass bei einer Verschiebung der Reagenzbehälter-Aufnahme 1 entlang der Bewegungsachse 7 in Richtung der Trägerplatte 9 eine Verbindung zwischen den fluidischen Verbindungsmitteln 2, genauer deren Transportleitungen 2b, und den Reagenzbehältern 18 sowie zwischen den pneumatischen Verbindungsmitteln 4 und den Reagenzbehältern 18 herstellbar ist.

Vergleicht man die Positionen der Reagenzbehälter-Aufnahme 1 und der Chip-Aufnahme 3 in Figur mit jener in Figur 4, so ist ersichtlich, dass sowohl die Reagenzbehälter-Aufnahme 1 als auch die Chip-Aufnahme 3 bereits in Richtung der Trägerplatte 9 verschoben sind.

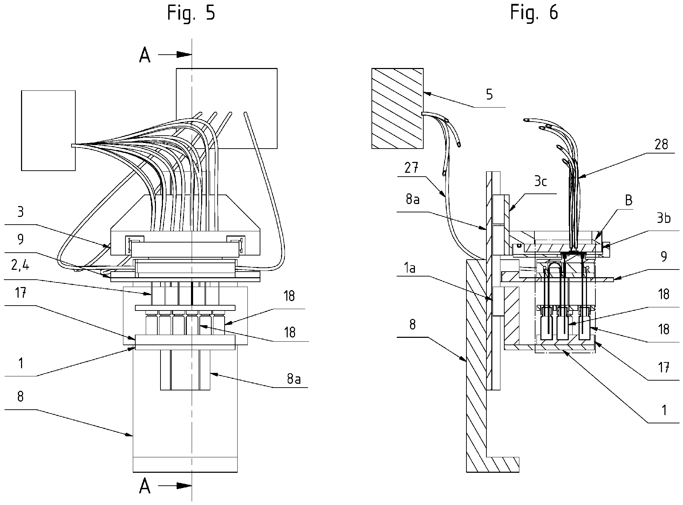

Figur 4 zeigt nun die Betriebsposition der Vorrichtung, bei der die fluidischen Anschlüsse 11 des mikrofluidischen Chips 10 an den Anschlussstücken 2a der fluidischen Verbindungsmittel 2 angeschlossen sind und sich jeweils ein Ende einer Transportleitung 2b eines fluidischen Verbindungsmittels 2 und ein Ende eines pneumatischen Verbindungsmittels 4 innerhalb eines Reagenzbehälters 18 befinden (siehe insbesondere Figuren 6 und 7). Die Reagenzbehälter-Aufnahme 1 und die Chip-Aufnahme 3 sind entlang der Schiene 8a in Richtung der linearen Bewegungsachse 7 in eine Maximalposition verfahren.

In Figur 5 ist eine Frontalansicht der Vorrichtung abgebildet, welche insbesondere zeigt, dass der Reagenzbehälter-Träger 17 mehrere Reihen an Reagenzbehältern 18 aufweist. Dabei sind die fluidischen Verbindungsmittel 2 und die pneumatischen Verbindungsmittel 4 in der gewählten Ansicht hintereinander positioniert.

Figur 6 zeigt nun eine Schnittdarstellung der Vorrichtung in der Betriebsposition, wobei einerseits der Anschluss des mikrofluidischen Chips 10 an die fluidischen Verbindungsmittel 2 sowie an die Steuereinrichtung 5 ersichtlich ist und andererseits die Verbindung der pneumatischen 4 und fluidischen Verbindungsmittel 2 mit den Reagenzbehältern 18.

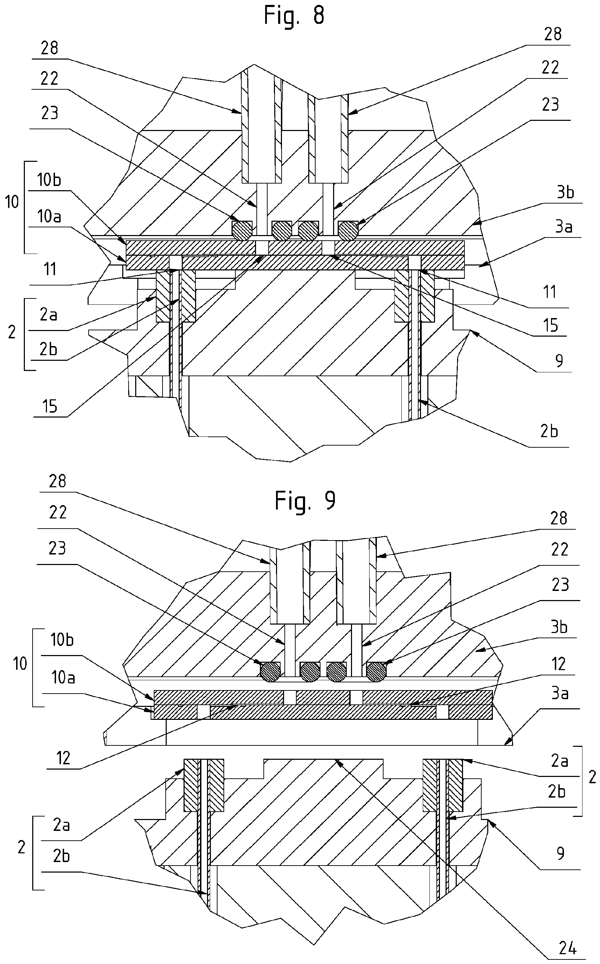

Während der Anschluss des mikrofluidischen Chips 10 anhand der Figuren 8 und 9 eingehend erläutert wird, soll anhand von Figur 7 der Mechanismus zum Transport der Reagenzien in Richtung des mikrofluidischen Chips 10 diskutiert werden.

Die Trägerplatte 9 weist eine Mehrzahl von Gasleitungskanälen 21 auf, durch welche die pneumatischen Verbindungsmittel 4 mit Gasleitungen 27 des pneumatischen Systems verbunden sind. Im vorliegenden Ausführungsbeispiel sind die pneumatischen Verbindungsmittel 4 als Transportleitungen ausgebildet, welche in Öffnungen der Trägerplatte 9 eingeklebt oder eingepresst sind. Um die Förderung der Reagenzien zu steuern, sind die Gasleitungskanäle 21 über zumindest ein Förderventil steuerbar, welches die Verbindung der Gasleitungskanäle 21 mit den Gasleitungen 27 des pneumatischen Systems freigeben oder absperren kann. Vorzugsweise ist für jedes pneumatische Verbindungsmittel 4 oder für jede Gasleitung 27 ein eigenes Förderventil vorgesehen.

Über die fluidischen Verbindungsmittel 2 können ausschließlich flüssige Reagenzien in Richtung des mikrofluidischen Chips 10 gefördert werden. Der in der Figur äußerst rechts abgebildete Reagenzbehälter 18 enthält ein flüssiges Reagenz. Wie dargestellt, befindet sich das dem mikrofluidischen Chip 10 abgewandte Ende der Transportleitung 2b des fluidischen Verbindungsmittels 2 innerhalb des Reagenzbehälters 18. Dabei durchdringt die Transportleitung 2b des fluidischen Verbindungsmittels 2 während der Positionierung der Reagenzbehälter-Aufnahme 1 ein Versiegelungselement 19 des Reagenzbehälters 18. Das Ende der Transportleitung 2b des fluidischen Verbindungsmittels 2 befindet sich dabei im Bodenbereich des Reagenzbehälters 18 und taucht in anderen Worten in das Reagenz ein. Das Anschlussstück 2a des fluidischen Verbindungsmittels 2 ist auf der dem Reagenzbehälter 18 abgewandten Seite der Trägerplatte 9 befestigt, sodass die Transportleitung 2b des fluidischen Verbindungsmittels 2 die Trägerplatte 9 durchqueren.

Analog zum fluidischen Verbindungsmittel 2 befindet sich das der Trägerplatte 9 gegenüberliegende Ende des als Transportleitung ausgebildeten pneumatischen Verbindungsmittels 4 innerhalb des Reagenzbehälters 18. Dabei durchdringt ein nadelförmiges Ende des pneumatischen Verbindungsmittels 4 während der Positionierung der Reagenzbehälter-Aufnahme 1 ebenfalls das Versiegelungselement 19 des Reagenzbehälters 18.
Dabei befindet sich das Ende des pneumatischen Verbindungsmittels 4 in einem dem Bodenbereich entgegengesetzten Bereich des Reagenzbehälters 18.

Durch das Versiegelungselement 19 bildet sich ein geschlossenes Volumen innerhalb des Reagenzbehälters 18 aus. Wird nun der Gasdruck im Reagenzbehälter 18 durch Gaszufuhr über das pneumatische Verbindungsmittel 4 erhöht, wird das flüssige Reagenz über die Transportleitung 2b des fluidischen Verbindungsmittels 2 in Richtung des mikrofluidischen Chips 10 befördert.

Bestimmte Reagenzien können nicht für längere Zeit in flüssiger Form aufbewahrt werden, da sie ihre Reaktivität verlieren. In diesem Fall ist ein Paar Reagenzbehälter 18 vorgesehen, wobei einer der Reagenzbehälter 18 ein Lösungsmittel SOL1,SOL2,SOL3,SOL4 enthält und der andere Reagenzbehälter 18 einen zu lösenden Feststoff. Im vorliegenden Ausführungsbeispiel handelt es sich bei dem Lösungsmittel um Acetonitril und bei dem Feststoff um pulverförmige Phosphoramidite der Basen Adenin B1, Guanin B2, Cytosin B3 und Thymin oder Uracil B4.

Die fluidischen Verbindungsmittel 2 sind analog zu den oben beschriebenen fluidischen Verbindungsmitteln 2 ausgebildet, wobei das Ende der Transportleitung 2b des fluidischen Verbindungsmittels 2 in dem das pulverförmige Phosphoramidit B1,B2,B3,B4 enthaltenden Reagenzbehälter 18 angeordnet ist. Die pneumatischen Verbindungsmittel 4 sind ebenfalls analog zu den oben beschriebenen pneumatischen Verbindungsmitteln 4 ausgebildet, jedoch ist das Ende des pneumatischen Verbindungsmittels 4 in dem das Lösungsmittel SOL1,SOL2,SOL3,SOL4 enthaltenden Reagenzbehälter 18 angeordnet. Der das pulverförmige Phosphoramidit B1,B2,B3,B4 enthaltenden Reagenzbehälter 18 ist mittels einer in der Trägerplatte 9 fixierten Verbindungsleitung 20 mit dem das Lösungsmittel SOL1,SOL2,SOL3,SOL4 enthaltenden Reagenzbehälter 18 verbunden. Wird nun der Gasdruck in dem das Lösungsmittel SOL1,SOL2,SOL3,SOL4 enthaltenden Reagenzbehälter 18 durch Gaszufuhr über das pneumatische Verbindungsmittel 4 erhöht, so tritt das Lösungsmittel SOL1,SOL2,SOL3,SOL4 über die Verbindungsleitung 20 in den das pulverförmige Phosphoramidit B1,B2,B3,B4 enthaltenden Reagenzbehälter 18 über, wo sich das pulverförmige Phosphoramidit B1,B2,B3,B4 im Lösungsmittel SOL1,SOL2,SOL3,SOL4 löst. Sobald das gesamte Lösungsmittel SOL1,SOL2,SOL3,SOL4 übergetreten ist, strömt Gas über die Verbindungsleitung 20 in den nunmehr die Lösung enthaltenden Reagenzbehälter 18, sodass über den Gasdruck nunmehr Lösung über das fluidische Verbindungsmittel 2 in Richtung des mikrofluidischen Chips 10 förderbar ist.

In alternativen Ausführungsvarianten kann auch vorgesehen sein, dass das Lösungsmittel SOL aus einem zentralen Lösungsmittelbehälter in die das pulverförmige Phosphoramidit B1,B2,B3,B4 enthaltenden Reagenzbehälter 18 eingeleitet wird und nicht über vier separate Reagenzbehälter 18 für das Lösungsmittel SOL1,SOL2,SOL3,SOL4.

Grundsätzlich sind zur Steuerung der mikrofluidischen Ventile 12 unterschiedlich ausgebildete Steuereinrichtungen 5 denkbar, beispielsweise piezoelektrisch betätigte Stößel oder Klappen. Im vorliegenden Ausführungsbeispiel erfolgt die Aktuierung der mikrofluidischen Ventile 12 über ein pneumatisches System der Steuereinrichtung 5. Während es im Allgemeinen denkbar ist, zwei separate pneumatische Systeme vorzusehen, eines für die Förderung der Reagenzien und eines für die Aktuierung der mikrofluidischen Ventile 12, ist es vorteilhaft, wenn die Vorrichtung ein einziges pneumatisches System umfasst. Im vorliegenden Ausführungsbeispiel ist daher ein pneumatisches System, eben das pneumatische System der Steuereinrichtung 5, vorhanden, sodass das pneumatische System der Steuereinrichtung 5 über die Gasleitungen 27 auch mit den Gasleitungskanälen 21 in der Trägerplatte 9 verbunden ist. In der Folge wird der Übersichtlichkeit halber nur mehr von dem pneumatischen System gesprochen.

Das pneumatische System ist über den Anschlussabschnitt 3b der Chip-Aufnahme 3 an die mikrofluidischen Ventile 12 des mikrofluidischen Chips 10 anschließbar. Zu diesem Zweck weist der Anschlussabschnitt 3b einen Steuerleitungskanal 22 für jedes der mikrofluidischen Ventile 12 auf. Jeder Steuerleitungskanal 22 ist dabei mit einer der Steuerleitungen 28 des pneumatischen Systems der Steuereinrichtung 5 verbunden. Beispielsweise können die Steuerleitungen 28 in die Steuerleitungskanäle 22 eingepresst und/oder eingeklebt sein. Der Anschlussabschnitt 3b kann beispielsweise direkt als Teil der Chip-Aufnahme 3 ausgebildet sein oder beispielsweise als an der Chip-Aufnahme 3 befestigte separate Platte.

Um das Öffnen und Schließen der mikrofluidischen Ventile 12 über die Steuereinrichtung 5 steuern zu können, ist jede der Steuerleitungen 28 in der Steuereinrichtung 5 über ein separates Steuerventil steuerbar. Dabei sind die mikrofluidischen Ventile 12 im vorliegenden Ausführungsbeispiel geschlossen, wenn das jeweilige Steuerventil geöffnet ist und umgekehrt.

Ausgehend von Figur 9 soll in der Folge der Anschluss des mikrofluidischen Chips 10 an die fluidischen Verbindungsmittel 2 und an die Steuereinrichtung 5 beschrieben werden. In Figur 9 befindet sich die Vorrichtung noch in einer Zwischenposition, wobei der mikrofluidische Chip 10 auf einem Positionierrand des Aufnahmefachs 3a aufliegt und die fluidischen Anschlüsse 11 fluchtend zu den Anschlussstücken 2a der fluidischen Verbindungsmittel 2 ausgerichtet sind, jedoch noch beabstandet sind. Die fluidischen Anschlüsse 11 sind im vorliegenden Ausführungsbeispiel Öffnungen, beispielsweise Bohrungen, an der Unterseite des mikrofluidischen Chips 10 ausgebildet. Die Anschlussstücke 2a sind an der Trägerplatte 9 befestigt, wobei zwischen den Anschlussstücken 2a ein Stützelement 24 angeordnet ist, um eine Durchbiegung des mikrofluidischen Chips 10 in der Betriebsposition zu verhindern.

Der mikrofluidische Chip 10 weist eine erste Trägerschicht 10a auf, die die fluidischen Anschlüsse 11 ausbildet. Diese sind dabei in der vorliegenden Ausführungsvariante als Öffnungen in der Unterseite des mikrofluidischen Chips 10 ausgebildet. Die Anschlussstücke 2a der fluidischen Verbindungsmittel 2 werden an die fluidischen Anschlüsse 11 angepresst und fungieren als weitere Dichtelemente, welche in der Betriebsposition an die erste Trägerschicht 10a bzw. die Unterseite des Chips 10 angepresst sind, um die erforderliche Dichtigkeit der Verbindung mit den Reagenzbehältern 18 zu gewährleisten. Die fluidischen Anschlüsse 11 sind fluchtend zu den fluidischen Verbindungsmitteln 2 ausgerichtet.

Der mikrofluidische Chip 10 ist mehrschichtig ausgebildet und weist eine zweite Trägerschicht 10b auf, welche in der Betriebsposition an die Dichtelemente 23 gepresst wird und die Oberseite des mikrofluidischen Chips 10 ausbildet. Die mikrofluidischen Ventile 12 sind im vorliegenden Ausführungsbeispiel gegenüber den Steuerleitungskanälen 22 seitlich versetzt und zwischen den beiden Trägerschichten 10a,10b angeordnet. Dabei sind die mikrofluidischen Ventile 12 im vorliegenden Ausführungsbeispiel als Membranen ausgebildet.

Um die innerhalb des mikrofluidischen Chips 10 angeordneten mikrofluidischen Ventile 12 über die Steuerleitungen 28 und die Steuerleitungskanäle 22 aktuieren zu können, weist die zweite Trägerschicht 10b als Öffnungen ausgebildete pneumatische Anschlüsse 15 auf, die fluchtend zu den Steuerleitungskanälen 22 ausgerichtet sind. Die mikrofluidischen Ventile 12 sind mittels pneumatischer Verbindungsleitungen 16 mit den pneumatischen Anschlüssen 15 verbunden. Die Aktuierung eines mikrofluidischen Ventils 12 erfolgt somit von der Steuereinrichtung 5 über ein Steuerventil, eine Steuerleitung 28, einen Steuerleitungskanal 22, einen pneumatischen Anschluss 15 und eine pneumatische Verbindungsleitung 16.

Der Anschlussabschnitt 3b weist auf einer dem mikrofluidischen Chip 10 bzw. der zweiten Trägerschicht 10b zugewandten Fläche Dichtelemente 23 auf, welche in der Betriebsposition die pneumatische Verbindung zwischen Steuerleitungskanal 22 und mikrofluidischem Ventil 12 sicherstellen, indem der Übergang zwischen den Steuerleitungskanälen und den pneumatischen Anschlüssen 15 abgedichtet wurd.

Wird nun die Chip-Aufnahme 3 weiter in Richtung der Trägerplatte 9 bewegt, so werden die Anschlussstücke 2a der fluidischen Verbindungsmittel 2 an die fluidischen Anschlüsse 11 bzw. die erste Trägerschicht 10a angepresst, wobei der mikrofluidische Chip 10 vom Aufnahmefach 3a abgehoben wird und an eine Klemmfläche des Anschlussabschnitts 3b bzw. an die Dichtelemente 23 gepresst wird. Diese Betriebsposition ist in Figur 8 dargestellt: Der mikrofluidische Chip 10 ist zwischen der Klemmfläche des Anschlussabschnitts 3b bzw. zwischen den an der Klemmfläche angeordneten Dichtelementen 23 und den Anschlussstücken 2a der fluidischen Verbindungsmittel 2 geklemmt. Durch das Anpressen der Anschlussstücke 2a an die fluidischen Anschlüssen 11 ist die Verbindung zwischen den Reagenzbehältern 18 und dem mikrofluidischen Chip 10 abgedichtet. Die Anschlussstücke 2a der der fluidischen Verbindungsmittel 2 dienen dabei ebenfalls als weitere Dichtelemente und sind vorzugsweise elastisch verformbar ausgebildet. Die Verformung der Dichtelemente 23 durch den Anpressdruck stellt wiederum die für die Aktuierung der mikrofluidischen Ventile notwendige Dichtheit der Verbindung zwischen den Steuerleitungskanälen 22 und den pneumatischen Anschlüssen 15 des mikrofluidischen Chips 10 sicher. Das Stützelement 24 liegt auf der durch die erste Trägerschicht 10a ausgebildeten Unterseite des mikrofluidischen Chips 10 auf und verhindert eine Durchbiegung des Chips 10 aufgrund der Klemmung.

Um den mikrofluidischen Chip 10 nach der Synthese wieder aus der Vorrichtung entnehmen zu können, wird die Chip-Aufnahme 3 von der Trägerplatte 9 weg bewegt, um in die in Figur 9 dargestellte Konfiguration zu gelangen.

Figur 10 zeigt ein mögliches Layout einer ersten Ausführungsvariante des mikrofluidischen Chips 10, mit dem eine Synthese der Oligonukleotide möglich ist. Der mikrofluidische Chip 10 weist eine fluidische Verbindung 13 auf, welche die Synthesekammer 14 mit den fluidischen Anschlüssen 11 verbindet. Jede fluidische Verbindung 13 ist mittels einem mikrofluidischen Ventil 12 absperrbar bzw. freigebbar, sodass über die Stellung des entsprechenden mikrofluidischen Ventils 12 die Zufuhr einer Reagenz aus einem der fluidischen Anschlüssen 11 zur Synthesekammer 14 unterbrochen oder erreicht werden kann.

Die fluidische Verbindung 13 unterteilt sich in einen Hauptkanal 13a, über welchen die Reagenzien in Richtung der Synthesekammer 14 strömen und eine Mehrzahl von Verbindungskanälen 13b, welche den Hauptkanal 13a jeweils mit einem der fluidischen Anschlüsse 11 verbinden.

Aufgrund des Versatzes der mikrofluidischen Ventile 12 und der pneumatischen Anschlüsse 15 ist jeweils ein die Ventile 12 mit den pneumatischen Anschlüssen 15 verbindender pneumatischer Verbindungskanal 16 vorgesehen. Die Verbindungskanäle 13b der fluidischen Verbindung 13 enden jeweils in einem mikrofluidischen Ventil 12, sodass die mikrofluidischen Ventile 12 jeweils zwischen dem Hauptkanal 13a und dem Verbindungskanal 13b angeordnet sind.

Der Hauptkanal 13a ist in der vorliegenden Ausführungsvariante in zwei parallel zueinander verlaufende Abschnitte, in der Folge als Äste bezeichnet, unterteilt, welche sich vor der Synthesekammer 14 in einen Synthesekanal 26 vereinigen. In der Synthesekammer 14 befindet sich ein Trägermedium mit Linker-Molekülen, welche als Ausgangspunkt für die Synthese der Oligonukleotide fungieren. Die Synthesekammer 14 kann beispielsweise trichterförmig ausgebildet sein und sich in Strömungsrichtung erweitern. Um das Trägermedium beim Durchströmen der Synthesekammer 14 nicht auszuspülen, ist eine Rückhaltestruktur 25 in Strömungsrichtung, vorzugsweise unmittelbar, hinter der Synthesekammer 14 angeordnet.

Um den zur Verfügung stehenden Bauraum optimal ausnutzen zu können, weist der Ast des Hauptkanals 13a, an dessen Ende der fluidischen Anschluss 11 für das Lösungsmittel SOL und der pneumatische Anschluss 15 für das Inertgas GAS angeordnet sind, zwei parallel zueinander verlaufende Abschnitte auf die durch ein, vorzugsweise U-förmiges, Verbindungsstück miteinander verbunden sind. Dabei münden die Verbindungskanäle 13b der Reagenzien B1,B2,B3,B4 in dem an den Synthesekanal 26 grenzenden Abschnitt des entsprechenden Asts des Hauptkanals 13a.

Wie die Durchströmung der fluidischen Verbindung 13 des mikrofluidischen Chips 10 bewerkstelligt wird, wird in der Folge anhand des Lösungsmittel SOL beschrieben. Dieses Prinzip lässt sich analog auf alle anderen Reagenzien anwenden.

Um Lösungsmittel SOL von dem entsprechenden fluidischen Anschluss 11 über den Verbindungskanal 13b und den Hauptkanal 13a in Richtung der Synthesekammer 14 strömen zu lassen wird einerseits das den Anschluss 11 steuernde mikrofluidische Ventil 12 geöffnet. Andererseits wird ein mikrofluidisches Ventil 12 geöffnet, welches einen als zweiten Auslass W2 ausgebildeten fluidischen Auslassanschluss 11b steuert. Der zweite Auslassanschluss 11b ist in Strömungsrichtung hinter der Synthesekammer 14 angeordnet, sodass das Lösungsmittel SOL vom fluidischen Anschluss 11 über die fluidische Verbindung 13, die Synthesekammer 14 und den zweiten Auslassanschluss 11b zum zweiten Auslass W2 strömt. Der zweite Auslass W2 kann beispielsweise durch einen Abfallbehälter ausgebildet sein.

Die mikrofluidischen Ventile 12 sind grundsätzlich in einer geschlossenen Stellung gehalten, sodass die Verbindungskanäle 13b vom Hauptkanal 13a abgesperrt sind bzw. die fluidische Verbindung 13 unterbrochen ist. Die geschlossene Stellung wird dadurch erreicht, dass die Steuereinrichtung 5 über das pneumatische System, genauer über die Steuerleitungen 28, die Steuerleitungskanäle 22, die pneumatischen Anschlüsse 15 und die pneumatischen Verbindungskanäle 16, Druck auf die mikrofluidischen Ventile 12 ausübt. Wird von der Steuereinrichtung 5 der auf eines der mikrofluidischen Ventile 12 ausgeübte Druck verringert bzw. wird die Druckbeaufschlagung ausgesetzt, so öffnet sich das entsprechende mikrofluidische Ventil 12 und die fluidische Verbindung 13 zwischen dem entsprechenden Verbindungskanal 13b und dem Hauptkanal 13a ist hergestellt bzw. offen.

Der Anschluss 11 für das Lösungsmittel SOL ist derart endseitig an einen Ast des Hauptkanals 13a angebunden, dass keiner der Verbindungskanäle 13b der für die Synthese notwendigen Reagenzien in Strömungsrichtung nach diesem liegt. Somit kann die fluidische Verbindung 13 mittels des Lösungsmittels SOL gespült werden, um Reagenzien zu entfernen. Um auch den zweiten Ast des Hauptkanals 13a spülen zu können, ist ein als erster Auslass W1 ausgebildeter erster Auslassanschluss 11a vorgesehen, welcher endseitig am zweiten Ast des Hauptkanals 13a angebunden ist. Sind das den ersten Anschlussabschnitt 11a steuernde mikrofluidische Ventil 12 und das den Anschluss 11 für das Lösungsmittel SOL steuernde mikrofluidische Ventil 12 gleichzeitig geöffnet, so strömt das Lösungsmittel SOL über den ersten Ast des Hauptkanals 13a in den zweiten Ast des Hauptkanals 13a, ohne dabei durch die Synthesekammer 14 zu strömen.

Zusätzlich dazu ist ein pneumatischer Anschluss 15 für ein Inertgas GAS vorgesehen, welcher im vorliegenden Ausführungsbeispiel mit dem pneumatischen System verbunden ist. Das pneumatische System enthält das Inertgas GAS, wobei es sich im vorliegenden Ausführungsbeispiel um Argon handelt. Durch Durchströmen der fluidischen Verbindung 13 mit dem Inertgas GAS wird die fluidische Verbindung 13 nach dem Spülen mit Lösungsmittel SOL getrocknet.

Bevor die Synthese starten kann, ist es notwendig die Reagenzien aus den Reagenzbehältern 18 über die Transportleitungen 2b der fluidischen Verbindungsmittel 2 an die mikrofluidischen Ventile 12 heranzuführen. Daher werden der Reihe nach die mikrofluidischen Ventile 12 für die fluidischen Anschlüsse 11 der für die Synthese notwendigen Reagenzien hintereinander gemeinsam mit dem mikrofluidischen Ventil 12 für den ersten Auslassanschluss 11a des ersten Auslasses W1 geöffnet. Zwischen den einzelnen Heranführungen wird der Hauptkanal 13a jeweils durch gleichzeitiges Öffnen des mikrofluidischen Ventils 12 für das Lösungsmittel SOL und des mikrofluidischen Ventils 12 für den ersten Auslassanschluss 11a des ersten Auslasses W1 zuerst gespült und danach durch Öffnen des mikrofluidischen Ventils 12 für das Inertgas GAS und des mikrofluidischen Ventils 12 für den ersten Auslassanschluss 11a des ersten Auslasses W1 getrocknet. Dadurch gelangt beim Heranführen, beim Spülen und beim Trocknen keine der Reagenzien in die Synthesekammer 14. Durch gleichzeitiges Öffnen des mikrofluidischen Ventils 12 für das Inertgas GAS und jeweils einem der mikrofluidischen Ventile 12 für die fluidischen Anschlüsse 11 der für die Synthese notwendigen Reagenzien können die Reagenzien nach dem Ende der Synthese wieder zurück in die Reagenzbehälter 18 gefördert werden.

In der Folge sollen nun die Syntheseschritte eines Synthesezyklus besprochen werden, die zur Koppelung eines Nukleotids an das Ende einer Teilsequenz eines Oligonukleotids bzw. als erstes Nukleotid an ein Linker-Molekül eines Trägermediums notwendig sind. Die Abfolge der Syntheseschritte und der dafür verwendeten Reagenzien ist an sich bekannt.

Jedes Oligonukleotid startet an einem Linker-Molekül eines in der Synthesekammer 14 angeordneten Trägermediums und wird mit jedem Syntheseschritt um ein Nukleotid erweitert, welches an das Ende der Kette gekoppelt wird. Die 5'-OH-Gruppe des Oligonukleotids ist mit eine säurelabilen Dimethoxytrityl-Schutzgruppe (4,4'-Dimethoxytrityl - DMT) versehen.

Zuerst wird der Synthesekammer 14 ein Reagenz zur Detritylierung DEBL eines Endes eines eine Teilsequenz aufweisenden Oligonukleotids bzw. zur Detrytilierung des Linker-Moleküls aus dem entsprechenden Reagenzbehälter 18 zugeführt. Dabei wird wie zuvor beschrieben das den fluidischen Anschluss 11 für das Reagenz zur Detritylierung DEBL steuernde mikrofluidische Ventil 12 gemeinsam mit dem den zweiten Auslassanschluss 11b steuernden mikrofluidischen Ventil 12 geöffnet.

Dadurch wird die DMT-Schutzgruppe entfernt, sodass ein weiteres Nukleotid an die freie 5'-OH-Gruppe angekoppelt werden kann. Bei dem Reagenz zur Detritylierung DEBL handelt es sich vorliegenden Fall um eine saure Lösung, nämlich eine Lösung enthaltend 2% Trichloressigsäure oder 3% Dichloressigsäure in einem inerten Lösungsmittel wie Dichlormethan oder Toluol denkbar. Dieser Schritt wird auch als Deblocking-Schritt bezeichnet.

Im nächsten Schritt wird die Nukleotidkette an der detritylierten, freien 5'-OH-Gruppe um eine Base, also entweder Adenin B1, Guanin B2, Cytosin B3 oder Thymin B4 für einen DNA Strang oder Uracil B4 für einen RNA Strang, verlängert. Dazu wird der Synthesekammer 14 abwechselnd ein Reagenz zur Aktivierung ACT der freien 5'-OH-Gruppe und ein Reagenz enthaltend Phosphoramidite der entsprechenden Base B1,B2,B3,B4 zugeführt. Die Phosporamidite werden in einem Lösungsmittel SOL, insbesondere Acetonitril, gelöst zugeführt. Die Aktivierung der 5'-OH-Gruppe wird im vorliegenden Fall mittels einer 0,2-0,7 molaren Lösung eines sauren Azol-Katalysators erreicht werden, insbesondere durch 1H-Tetrazol, 5-Ethylthio-1H-Tetrazol, 2-Benzylthiotetrazol oder 4,5-Dicyanoimidazol. Dabei koppelt das Nukleotid an der freien 5'-OH-Gruppe des Oligonukleotids an, während der Phosphoramidit-Rest abgespalten wird. Die 5'-OH-Gruppe des neu gekoppelten Nukleotids ist wiederum durch eine DMT-Schutzgruppe geschützt. Dieser Schritt wird auch als Coupling-Schritt bezeichnet

In der Synthesekammer 14 wird im nächsten Schritt eine Mischung aus zwei Reagenzien zur Blockierung CAP1,CAP2 nicht umgesetzter 5'-OH-Gruppen zugeführt. Im vorliegenden Fall wird die Blockierung nicht umgesetzter 5'-OH-Gruppen durch eine Mischung aus Acetanhydrid und 1-Methylimidazol als Katalysator erreicht. Dieser Schritt wird auch als Capping-Schritt bezeichnet.

Als letzter Schritt eines Synthesezyklus erfolgt die Oxidation einer Phosphittriester-Bindung die zwischen dem neu gekoppelten Nukleotid und der entsprechenden 5`-OH-Gruppe des Oligonukleotids ausgebildet ist, indem ein Reagenz zur Oxidation OXI zugeführt wird. Das Reagenz zur Oxidierung OXI oxidiert die Phosphittriester-Bindung in einen vierfach koordinierten Phosphotriester, einen geschützten Vorläufer der natürlich vorkommenden Phosphatdiester Internukleosidbindung. Dadurch wird die Bindung zwischen dem angekoppelten Nukleotid und der entsprechenden 5'-OH-Gruppe stabilisiert. Die Oxidation wird im vorliegenden Fall unter wasserfreien Bedingungen mittels (1S)-(+)-(10-Camphersulfonyl)-oxaziridin (CSO) erreicht. Dieser Schritt wird als Oxidations-Schritt bezeichnet.

Im erfindungsgemäßen Verfahren wird der mikrofluidische Chip 10 bzw. die fluidische Verbindung 13 nach jedem Schritt des Synthesezyklus, wie zuvor beschrieben, gespült und getrocknet. Besonders vorteilhaft ist es dabei, wenn während dem Spülen und Trocknen die mikrofluidischen Ventile 12 der als Auslass W1,W2 ausgebildeten fluidischen Auslassanschlüsse 11a,11b abwechselnd geöffnet und geschlossen werden.

Die Öffnungsdauer der mikrofluidischen Ventile 12, durch welche die in die Synthesekammer 14 gelangende Menge an Reagenzien und die Dauer des Syntheseschritts bzw. die Dauer der Spülung oder Trocknung bestimmt wird, wird durch die Steuereinheit 5 gesteuert. Dabei weist die Steuereinheit 5 eine Programmierung auf, welche derart ausgebildet ist, für jeden der Syntheseschritte, des Spülvorgangs und des Trocknungsvorgangs die erforderliche Öffnungszeit der entsprechenden mikrofluidischen 12 festzulegen.

Die vier Schritte eines Synthesezyklus werden in der Reihenfolge der Nukleotidsequenz des zu synthetisierenden Oligonukleotids so oft wiederholt, bis das Oligonukleotid die vorbestimmte Länge und Sequenz aufweist. Sobald das zu synthetisierende Oligonukleotid fertiggestellt ist, wird der Synthesekammer 14 ein Reagenz zur Abspaltung der Oligonukleotide von den Linker-Molekülen und zur Entfernung der Schutzgruppen CL/DE zugeführt. Im vorliegenden Fall wird als Reagenz zur Abspaltung der Oligonukleotide von den Linker-Molekülen und zur Entfernung der Schutzgruppen CL/DE eine Mischung aus Ammoniak und Methylamin eingesetzt, wobei die beide Reagenzien vorzugsweise zu gleichen Teilen in der Mischung enthalten sind. Dieses Reagenz CL/DE löst die Oligonukleotide von den Linker-Molekülen, wobei dieser Vorgang etwa 3 bis 15 Minuten, in der Regel etwa 5 Minuten, dauert. Dabei ist das den fluidischen Anschluss 11 für einen Produktsammelbehälter PRO steuernde mikrofluidische Ventil 12 geöffnet, um die synthetisierten Oligonukleotide in den Produktsammelbehälter PRO zu fördern. Das Entfernen der Schutzgruppen dauert in der Regel weitere 3 bis 15 Minuten, in der Regel etwa 5 Minuten, wenn der Produktsammelbehälter PRO, beispielsweise über einen eingebauten Heizblock, auf eine Temperatur zwischen 50° und 75°, vorzugsweise etwa 65°C, gebracht wird. Bei Raumtemperatur benötigt dieser Vorgang zwischen 45 und 120 Minuten, in der Regel etwa 60 Minuten.

Nach der Beendigung der Synthese kann der Produktsammelbehälter PRO entnommen und weiter verarbeitet werden. Die Vorrichtung kann in der Folge wieder von der Betriebsposition in die Bestückungsposition gebracht werden, indem die zuvor beschriebenen Schritte (Figuren 4,3,2) in umgekehrter Reihenfolge durchgeführt werden, um sowohl den mikrofluidischen Chip 10 als auch den Reagenzbehälter-Träger 17 aus der Vorrichtung entnehmen bzw. auswechseln zu können.

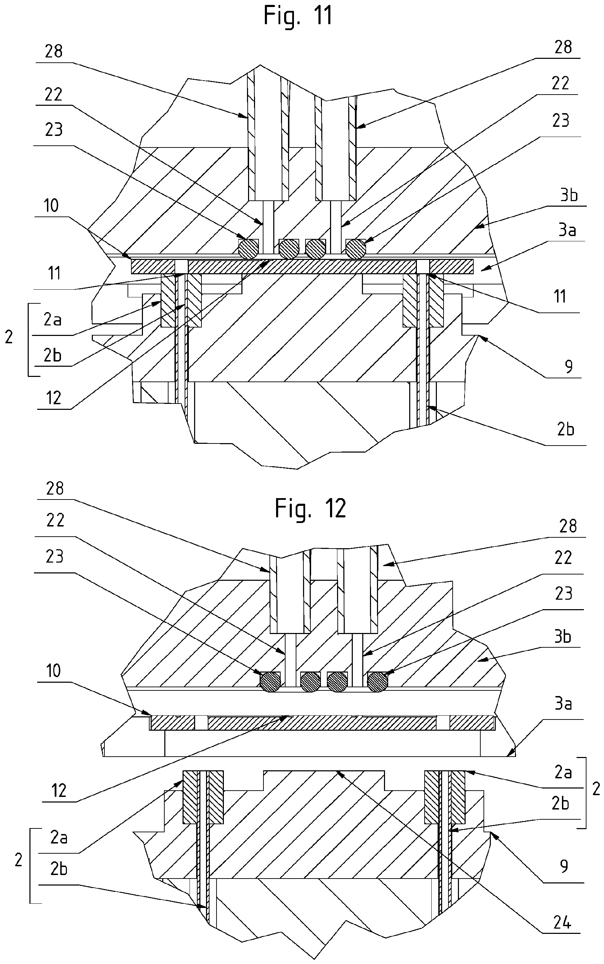

Die Figuren 11 und 12 zeigen eine zweite Ausführungsvariante der Vorrichtung in der eine zweite, bevorzugte Ausführungsvariante des mikrofluidischen Chips 10 zum Einsatz kommt. Da der grundsätzliche Aufbau der Vorrichtung unverändert bleibt, wird in der Folge lediglich auf die Unterschiede eingegangen. Die Figuren 11 und 12 verdeutlichen dabei im Vergleich mit den Figuren 8 und 9 die strukturellen Unterschiede der beiden Ausführungsvarianten. In beiden Ausführungsvarianten sind die pneumatischen Verbindungsmittel 4 als unmittelbar mit der Trägerplatte 9 verbundene Transportkanäle ausgebildet, welche beispielsweise in die Gasleitungskanäle 21 eingeklebt sind.

Der unterschiedliche Aufbau des mikrofluidischen Chips 10 und die sich daraus ergebenden Unterschiede beim Anschluss an die fluidischen Verbindungsmittel 2 und beim Anschluss an die Steuereinrichtung 5 werden anhand von Figur 11 und 12 diskutiert.

Der mikrofluidische Chip 10 ist in der zweiten Ausführungsvariante einschichtig aufgebaut, wobei vorzugsweise auch die mikrofluidischen Ventile 12 aus dem Material des mikrofluidischen Chips 10 ausgebildet sind, der mikrofluidische Chip 10 also monolithisch aufgebaut ist. Die mikrofluidischen Ventile 12 sind dabei auf einer Seite des mikrofluidischen Chips 10, im vorliegenden Ausführungsbeispiel der Oberseite, ausgebildet und die fluidischen Anschlüsse 11 auf der den mikrofluidischen Ventile 12 gegenüberliegenden Seite, im vorliegenden Fall der Unterseite, angeordnet. Die mikrofluidischen Ventile 12 sind dem Anschlussabschnitt 3b der Chip-Aufnahme 3 zugewandt und sind fluchtend zu den Steuerleitungskanälen 22 ausgerichtet, jedoch von diesen beabstandet.

In dieser Ausführungsvariante werden die mikrofluidischen Ventile 12 direkt an die Steuerleitungen 28 bzw. die Steuerleitungskanäle 22 angeschlossen, sodass keine pneumatischen Anschlüsse 15 bzw. keine pneumatischen Verbindungsleitungen 16 notwendig sind. Wenn der mikrofluidische Chip 10, wie in Figur 11 zu erkennen ist, zwischen den Anschlussstücken 2a der fluidischen Verbindungsmittel 2 und den Dichtelementen 23 geklemmt ist, dichten die Dichtelemente 23 den Raum zwischen den an der Oberseite des mikrofluidischen Chips 10 angeordneten mikrofluidischen Ventilen 12 ab. Durch Druckbeaufschlagung der mikrofluidischen Ventilen 12 über die Steuerleitungen 28 des pneumatischen Systems werden die als Membran ausgebildeten mikrofluidischen Ventilen 12 verformt und unterbrechen die fluidische Verbindung 13.

Figur 13 zeigt abschließend das Layout der zweiten Ausführungsvariante des mikrofluidischen Chips 10. Auch dabei soll in der Folge nur auf die Unterschiede zum zuvor beschriebenen Layout eingegangen werden. Der Vollständigkeit halber sei erwähnt, dass die Schritte des Synthesezyklus vollkommen analog ablaufen.

Im vorliegenden Ausführungsbeispiel sind einige der mikrofluidischen Ventile 12 innerhalb der Verbindungskanäle 13b und nicht endseitig im Übergang zwischen den Verbindungskanälen 13b und dem Hauptkanal 13a angeordnet. Wie zuvor erwähnt, sind in dieser Ausführungsvariante weder pneumatische Anschlüsse 15 noch pneumatischen Verbindungsleitungen 16 im mikrofluidischen Chip 12 vorgesehen.

Das Inertgas GAS ist über einen fluidischen Anschluss 11 zuführbar, welcher jedoch, beispielsweise über die Gasleitungskanäle 21, an das pneumatische System angeschlossen ist. In alternativen Ausführungsvarianten können für das Reagenz zur Abspaltung der Oligonukleotide von den Linker-Molekülen und zur Entfernung der Schutzgruppen CL/DE zwei separate fluidische Anschlüsse 11 bzw. zwei separate Reagenzbehälter 18 vorgesehen sein.

Bei beiden Ausführungsvarianten des mikrofluidischen Chips 10 sind die fluidischen Anschlüsse 11 für die Reagenzien zur Durchführung der Synthesezyklen derart an den Hauptkanal 13a angeschlossen, dass die fluidischen Anschlüsse 11 für die Basen B1,B2,B3,B4 und das Reagenz zur Aktivierung ACT mit dem ersten Ast des Hauptkanals 13a verbunden sind und die fluidischen Anschlüsse 11 für das Reagenz zur Detritylierung DEBL, das Reagenz zur Oxidation OXI, sowie die beiden Reagenzien zur Blockierung nicht umgesetzter 5`-OH-Gruppen CAP1,CAP2 mit dem zweiten Ast des Hauptkanals 13a verbunden sind. Es versteht sich von selbst, dass die Basen B1,B2,B3,B4 in beliebiger Reihenfolge an den Hauptkanal 13a angeschlossen werden können.

Am Ende des ersten Asts des Hauptkanals 13a sind die Anschlüsse 11,15 für die Zuführung des Lösungsmittels SOL und des Inertgases GAS angeschlossen. Am Ende des zweiten Asts des Hauptkanals 13a ist der erste Auslassanschluss 11a für den ersten Auslass W1 angeschlossen. Der zweite Ast des Hauptkanals 13a ist weiters mit dem fluidischen Anschluss 11 für das Reagenz zur Abspaltung der Oligonukleotide von den Linker-Molekülen und zur Entfernung der Schutzgruppen CL/DE verbunden.

Am Übergang zwischen den beiden Ästen des Hauptkanals 13a und des Synthesekanals 26 ist in den dargestellten Ausführungsvarianten ebenfalls ein mikrofluidisches Ventil 12 angeordnet, welches den Synthesekanal 26, beispielsweise während der Heranführung der Reagenzien, verschließen kann.

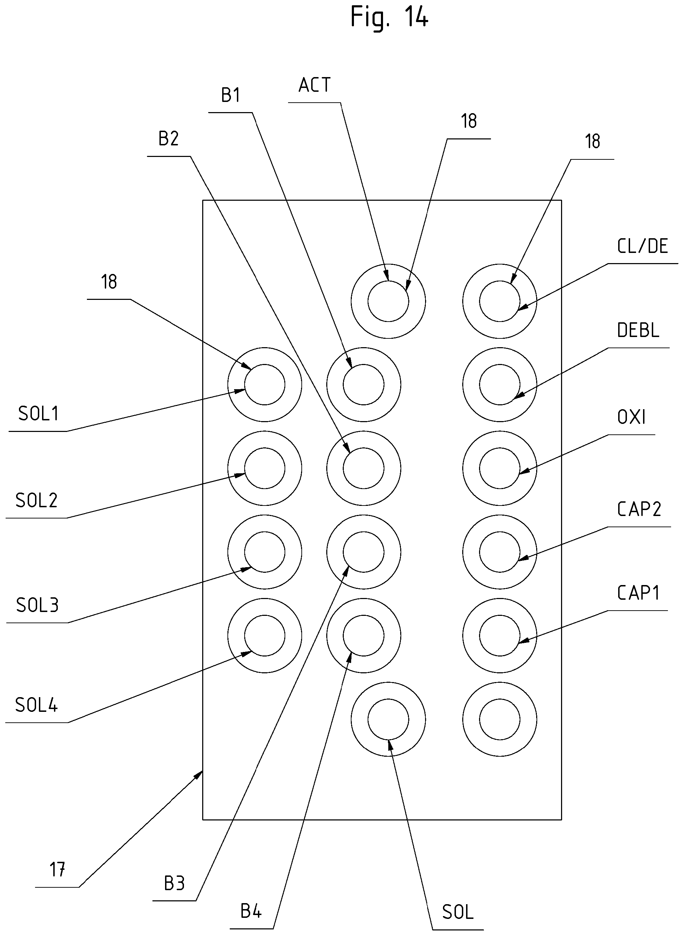

In Figur 14 ist beispielhaft die Anordnung der die Reagenzien enthaltenden Reagenzbehälter 18 im Reagenzbehälter-Träger 17 dargestellt, wobei die Anordnung der Reagenzbehälter 18 auf die zweite, bevorzugte Ausführungsform der mikrofluidischen Chips 10 abgestimmt ist.

Die Reagenzbehälter 18 sind in der Abbildung in drei Spalten angeordnet, wobei der Übersichtlichkeit halber nur jeweils der oberste Reagenzbehälter 18 einer Spalte mit einem Bezugszeichen versehen wurde.

Die mittlere Spalte enthält von oben nach unten gesehen Reagenzbehälter 18 für folgende Reagenzien: Reagenz zur Aktivierung ACT einer detritylierten 5'-OH-Gruppe, pulverförmiges Phosphoramidit der ersten Base Adenin B1, pulverförmiges Phosphoramidit der zweiten Base Guanin B2, pulverförmiges Phosphoramidit der dritten Base Cytosin B3, pulverförmiges Phosphoramidit der vierten Base Thymin oder Uracil B4 sowie Lösungsmittel SOL.

Die linke Spalte umfasst enthält von oben nach unten gesehen vier Reagenzbehälter 18 enthaltend Lösungsmittel SOL, vorzugsweise Acetonitril, wobei der erste Reagenzbehälter 18 Lösungsmittel SOL1 für die erste Base B1, der zweite Reagenzbehälter 18 Lösungsmittel SOL2 für die zweite Base B2, der dritte Reagenzbehälter 18 Lösungsmittel SOL3 für die dritte Base B3 und der vierte Reagenzbehälter 18 Lösungsmittel SOL4 für die vierte Base B4 enthält. Dabei sind die Reagenzbehälter 18 für das Lösungsmittel SOL1,SOL2,SOL3,SOL4 jeweils paarweise mit den entsprechenden Reagenzbehälter 18 für die Basen B1,B2,B3,B4 angeordnet.

Die rechte Spalte umfasst von oben nach unten gesehen Reagenzbehälter 18 für folgende Reagenzien: ein Reagenz zur Abspaltung der Oligonukleotide von den Linker-Molekülen und zur Entfernung der Schutzgruppen CL/DE, Reagenz zur Detritylierung DEBL einer mit einer Dimethoxytrityl-Schutzgruppe versehenen 5'-OH-Gruppe, Reagenz zur Oxidation OXI einer Phosphittriesterbindung, zweite Reagenz zur Blockierung CAP2 nicht umgesetzter 5`-OH-Gruppen, erste Reagenz zur Blockierung CAP1 nicht umgesetzter 5`-OH-Gruppen.

Dabei sind die Reagenzbehälter 18 der mittleren Spalte an die fluidischen Anschlüsse 11 des ersten Asts des Hauptkanals 13a des mikrofluidischen Chips 10 anschließbar sind und die Reagenzbehälter 18 der rechten Spalte an die fluidischen Anschlüsse 11 des zweiten Asts des Hauptkanals 13a des mikrofluidischen Chips 10 anschließbar.

### BEZUGSZEICHENLISTE

- 1: Reagenzbehälter-Aufnahme 1a Verbindungsabschnitt
- 2: fluidische Verbindungsmittel
2a Anschlussstück
2b Transportleitung
- 3: Chip-Aufnahme
3a Aufnahmefach
3b Anschlussabschnitt
3c Verbindungsabschnitt
- 4: pneumatische Verbindungsmittel
- 5: Steuereinrichtung
- 6: Aktuatoreinrichtung
- 7: lineare Bewegungsachse der Aktuatoreinrichtung
- 8: Rahmengestell 8a Schiene
- 9: Trägerplatte
- 10: mikrofluidischer Chip
10a erste Trägerschicht
10b zweite Trägerschicht
- 11: fluidischer Anschluss
11a erster Auslassanschluss
11b zweiter Auslassanschluss
- 12: mikrofluidisches Ventil
- 13: fluidische Verbindung
13a Hauptkanal
13b Verbindungskanal
- 14: Synthesekammer
- 15: pneumatischer Anschluss
- 16: pneumatischer Verbindungskanal
- 17: Reagenzbehälter-Träger
- 18: Reagenzbehälter
- 19: Versiegelungselement
- 20: Verbindungsleitung
- 21: Gasleitungskanal
- 22: Steuerleitungskanal
- 23: Dichtelemente
- 24: Stützelement
- 25: Rückhaltestruktur
- 26: Synthesekanal
- 27: Gasleitung
- 28: Steuerleitung
- SOL: Lösungsmittel
- GAS: Inertgas
- ACT: Reagenz zur Aktivierung einer detritylierten 5'-OH-Gruppe
- B1: Base 1 (Bspw. Phosphoramidit der Base Adenin)
- B2: Base 2 (Bspw. Phosphoramidit der Base Guanin)
- B3: Base 3 (Bspw. Phosphoramidit der Base Cytosin)
- B4: Base 4 (Bspw. Phosphoramidit der Base Thymin oder Uracil)
- W1: erster Auslass
- CL/DE: Reagenz zur Abspaltung der Oligonukleotide von den Linker-Molekülen und/oder einer Reagenz zur Entfernung der Schutzgruppen
- DEBL: Reagenz zur Detritylierung einer mit einer Dimethoxytrityl-Schutzgruppe versehenen 5`-OH-Gruppe
- OXI: Reagenz zur Oxidation einer Phosphittriesterbindung
- CAP1: erstes Reagenz zur Blockierung nicht umgesetzter 5'-OH-Gruppen
- CAP2: zweites Reagenz zur Blockierung nicht umgesetzter 5'-OH-Gruppen
- PRO: Produktsammelbehälter
- W2: zweiter Auslass
- SOL1: Lösungsmittel zur Lösung von Base 1
- SOL2: Lösungsmittel zur Lösung von Base 2
- SOL3: Lösungsmittel zur Lösung von Base 3
- SOL4: Lösungsmittel zur Lösung von Base 4

## Patentansprüche

1. Vorrichtung zur Synthese von Oligonukleotiden, vorzugweise von DNA-Strängen,
**dadurch gekennzeichnet, dass** die Vorrichtung folgende Bestandteile umfasst:
- eine Reagenzbehälter-Aufnahme (1) zur Aufnahme eines mehrere Reagenzbehälter (18) für Reagenzien zur Synthese der Oligonukleotide umfassenden Reagenzbehälter-Trägers (17);
- einen wechselbaren mikrofluidischen Chip (10) umfassend eine Synthesekammer (14) zur Synthese der Oligonukleotide, fluidische Anschlüsse (11) für die Zufuhr der Reagenzien sowie mikrofluidische Ventile (12),
wobei die fluidischen Anschlüsse (11) über eine fluidische Verbindung (13) mit der Synthesekammer (14) verbunden sind und die fluidische Verbindung (13) zwischen jeweils einem fluidischen Anschluss (11) und der Synthesekammer (14) mittels einem der mikrofluidischen Ventile (12) unterbrechbar bzw. freigebbar ist;
- eine Steuereinrichtung (5), vorzugsweise umfassend ein pneumatisches System, zur Steuerung der mikrofluidischen Ventile (12);
- fluidische Verbindungsmittel (2) zum Transport der Reagenzien aus den Reagenzbehältern (18) zu den fluidischen Anschlüssen (11) des mikrofluidischen Chips (10),
wobei in einer Bestückungsposition die Vorrichtung mit dem mikrofluidischen Chip (10) bestückbar ist und die Reagenzbehälter-Aufnahme (1) mit dem Reagenzbehälter-Träger (17) bestückbar ist,
wobei die Reagenzbehälter-Aufnahme (1), der mikrofluidische Chip (10) und die fluidischen Verbindungsmittel (2) von der Bestückungsposition in eine Betriebsposition bringbar sind, in welcher Betriebsposition die Reagenzbehälter-Aufnahme (1), der mikrofluidische Chip (10) und die fluidischen Verbindungsmittel (2) derart zueinander positioniert sind,
dass die mikrofluidischen Ventile (12) des mikrofluidischen Chips (10) an der Steuereinrichtung (5) angeschlossen sind, dass in der Reagenzbehälter-Aufnahme (1) angeordnete Reagenzbehälter (18) über die fluidischen Verbindungsmittel (2) mit den fluidischen Anschlüssen (11) des mikrofluidischen Chips (10) verbunden sind,
sodass in Abhängigkeit der Ventilstellung der mikrofluidischen Ventile (12) Reagenzien aus den Reagenzbehältern (18) in Richtung der Synthesekammer (14) förderbar sind.

2. Vorrichtung nach Anspruch 1, **dadurch gekennzeichnet, dass** eine Aktuatoreinrichtung (6) vorgesehen ist, mit welcher die Reagenzbehälter-Aufnahme (1), der mikrofluidische Chip (10) und die fluidischen Verbindungsmittel (2) von der Bestückungsposition in die Betriebsposition bringbar sind, wobei vorzugsweise die Aktuatoreinrichtung (6) eine lineare Bewegungsachse (7) aufweist und die Positionierung von Reagenzbehälter-Aufnahme (1), fluidischen Verbindungsmitteln (2a) und mikrofluidischem Chip (10) entlang der Bewegungsachse (7) erfolgt.

3. Vorrichtung nach Anspruch 2, **dadurch gekennzeichnet, dass** die Aktuatoreinrichtung (6) ein Rahmengestell (8) aufweist, wobei die fluidischen Verbindungsmittel (2), vorzugsweise mittels einer Trägerplatte (9), fest am Rahmengestell (8) angebunden sind und wobei die Reagenzbehälter-Aufnahme (1) und eine Chip-Aufnahme (3) zur Aufnahme des mikrofluidischen Chips (10) vorzusgweise linear entlang der Bewegungsachse (7) in Richtung der fluidischen Verbindungsmittel (2) verschiebbar am Rahmengestell (8) angebunden sind, um die Reagenzbehälter-Aufnahme (1) und den mikrofluidischen Chip (10) von der Bestückungsposition in die Betriebsposition und umgekehrt zu bringen.

4. Vorrichtung nach einem der Ansprüche 1 bis 3, **dadurch gekennzeichnet, dass** die Komponenten der Vorrichtung in der Betriebsposition in folgender Reihenfolge, vorzugsweise in Richtung der Bewegungsachse (7) gesehen, zueinander positioniert sind:
- Reagenzbehälter-Aufnahme (1)
- fluidische Verbindungsmittel (2)
- mikrofluidischer Chip (10),
wobei die fluidischen Anschlüsse (11) auf einer den fluidischen Verbindungsmitteln (2) zugewandten Seite des mikrofluidischen Chips (10) angeordnet sind und die mikrofluidischen Ventile (12) auf einer den fluidischen Anschlüssen (11) gegenüberliegenden Seite des mikrofluidischen Chips (10) an die Steuereinrichtung (5) angeschlossen sind.

5. Vorrichtung nach einem der Ansprüche 1 bis 4, **dadurch gekennzeichnet, dass** ein fluidisches Verbindungsmittel (2) jeweils ein Anschlussstück (2a) zur Verbindung mit einem der fluidischen Anschlüsse (11) des mikrofluidischen Chips (10) und eine, vorzugsweise nadelförmige, Transportleitung (2b) zum Anschluss an einen der Reagenzbehälter (18) umfasst.

6. Vorrichtung nach einem der Ansprüche 1 bis 5, **dadurch gekennzeichnet, dass** pneumatische Verbindungsmittel (4) vorgesehen sind, über welche ein pneumatisches System, vorzugsweise das pneumatische System der Steuereinrichtung (5), in der Betriebsposition mit den in der Reagenzbehälter-Aufnahme (1) angeordneten Reagenzbehältern (18) verbindbar ist, um Reagenzien über die fluidischen Verbindungsmittel (2) in Richtung des mikrofluidischen Chips (10) zu fördern.

7. Vorrichtung nach Anspruch 5 und 6, **dadurch gekennzeichnet, dass** in der Betriebsposition jeweils ein Ende einer Transportleitung (2b) eines der fluidischen Verbindungsmittel (2) und ein Ende eines der pneumatischen Verbindungsmittel (4) innerhalb eines eine flüssige Reagenz enthaltenden Reagenzbehälters (18) angeordnet sind, um über den Gasdruck des pneumatischen Systems Reagenz aus dem Reagenzbehälter (18) in Richtung der Synthesekammer (14) zu befördern, wobei die Transportleitung (2b) und das pneumatische Verbindungsmittel (4) ein Versiegelungselement (19) des entsprechenden Reagenzbehälters (18) durchdringen.

8. Vorrichtung nach Anspruch 5 und 6 oder nach Anspruch 7, **dadurch gekennzeichnet, dass** in der Betriebsposition zumindest ein Paar korrespondierender Reagenzbehälter (18) in der Reagenzbehälter-Aufnahme (1) vorgesehen ist, wobei einer der Reagenzbehälter (18) einen Feststoff (B1,B2,B3,B4), vorzugsweise Phosphoramidite der Basen Adenin, Guanin, Cytosin und Thymin oder Uracil in Pulverform, und einer der Reagenzbehälter (18) Lösungsmittel (SOL1,SOL2,SOL3,SOL4), vorzugsweise Acetonitril, enthält
und dass in der Betriebsposition ein Ende eines der pneumatischen Verbindungsmittel (4) in dem das Lösungsmittel (SOL1,SOL2,SOL3,SOL4) enthaltenden Reagenzbehälter (18) angeordnet ist und ein Ende einer Transportleitung (2b) eines der fluidischen Verbindungsmittel (2) in dem den Feststoff (B1,B2,B3,B4) enthaltenden Reagenzbehälter (18) angeordnet ist und dass eine Verbindungsleitung (20) die beiden Reagenzbehälter (18) miteinander verbindet, sodass über den Gasdruck des pneumatischen Systems Lösungsmittel (SOL1,SOL2,SOL3,SOL4) aus dem einen Reagenzbehälter (18) in den anderen Reagenzbehälter (18) übertritt, sich der Feststoff (B1,B2,B3,B4) im Reagenzbehälter (18) im Lösungsmittel löst und die Lösung in Richtung der Synthesekammer (14) förderbar ist.

9. Vorrichtung nach einem der Ansprüche 1 bis 8, **dadurch gekennzeichnet, dass** der Reagenzbehälter-Träger (17) zumindest sechs, vorzugsweise zumindest sieben, Reagenzbehälter (18) umfasst und in der Reagenzbehälter-Aufnahme (1) angeordnet ist, wobei jeder der Reagenzbehälter (18) eine der folgenden Reagenzien enthält:
- jeweils ein Reagenz enthaltend Phosphoramidite der Basen Adenin, Guanin, Cytosin und Thymin oder Uracil (B1,B2,B3,B4);
- ein Reagenz zur Detritylierung (DEBL) eines Endes eines Oligonukleotides, vorzugsweise enthaltend Dichloressigsäure, Trichloressigsäure oder Zinkbromid;
- ein Reagenz zur Aktivierung (ACT) einer detritylierten 5'-OH-Gruppe eines Oligonukleotids und zur Koppelung der Phosphoramidite, vorzugsweise enthaltend Tetrazol;
- ein Reagenz zur Oxidierung (OXI) eines Phosphittriesters, vorzugsweise eine Iod-Wasser Lösung umfassend eine schwache Base, insbesondere Pyridin, Lutidin oder Collidin, oder ein nichtwässriges Oxidationsmittel wie CSO;
- vorzugsweise zumindest ein Reagenz zur Blockierung (CAP1,CAP2) nicht umgesetzter 5`-OH-Gruppen von aktivierten Oligonukleotiden, vorzugsweise Acetanhydrid und N-Methylimidazol oder DMAP;
wobei jeder Reagenzbehälter (18) durch ein Versiegelungselement (19) verschlossen ist.

10. Vorrichtung nach einem der Ansprüche 1 bis 9, **dadurch gekennzeichnet, dass** die fluidische Verbindung (13) des mikrofluidischen Chips (10) einen mit der Synthesekammer (14) verbunden Hauptkanal (13a) und eine Mehrzahl von fluidischen Verbindungskanälen (13b) umfasst, wobei jeweils ein fluidischer Anschluss (11) über einen fluidischen Verbindungskanal (13b) und ein mikrofluidisches Ventil (12) mit dem Hauptkanal (13a) verbunden ist.

11. Vorrichtung nach einem der Ansprüche 1 bis 10, **dadurch gekennzeichnet, dass** der mikrofluidische Chip (10) mehrschichtig ausgebildet ist und eine erste, die fluidischen Anschlüsse (11) aufweisende Trägerschicht (10a) sowie eine zweite Trägerschicht (10b) umfasst, wobei die zweite Trägerschicht (10b) zum Anschluss an die Steuereinrichtung (5) ausgebildet ist und die mikrofluidischen Ventile (12) zwischen erster (10a) und zweiter Trägerschicht (10b) angeordnet sind.

12. Vorrichtung nach einem der Ansprüche 1 bis 11, **dadurch gekennzeichnet, dass** die Steuereinrichtung (5) ein pneumatisches System umfasst und der mikrofluidische Chip (10) pneumatische Anschlüsse (15) zum Anschluss an das pneumatische System sowie eine Mehrzahl an pneumatischen Verbindungskanälen (16) aufweist, wobei jeweils ein pneumatischer Anschluss (15) über einen pneumatischen Verbindungskanal (16) mit einem mikrofluidischen Ventil (12) verbunden ist.

13. Vorrichtung nach Anspruch 12, **dadurch gekennzeichnet, dass** das pneumatische System der Steuereinrichtung (5), und/oder das mit den pneumatischen Verbindungsmitteln (4) verbundene pneumatische System, ein Inertgas, vorzugsweise Argon, enthält.

14. Mikrofluidischer Chip (10) für eine Vorrichtung zur Synthese von Oligonukleotiden nach einem der Ansprüche 1 bis 13 umfassend:
- eine Synthesekammer (14) zur Synthese der Oligonukleotide;
- eine Mehrzahl an über eine Steuereinrichtung (5) betätigbaren, mikrofluidischen Ventilen (12);
- eine Mehrzahl an fluidischen Anschlüssen (11) für fluidische Verbindungsmittel (2) zur Zufuhr von Reagenzien;
- eine fluidisch Verbindung (13), welche jeweils einen fluidischen Anschluss (11) über ein mikrofluidisches Ventil (12) mit der Synthesekammer (14) verbindet; wobei die fluidischen Anschlüsse (11) auf einer Seite des mikrofluidischen Chips (10) angeordnet sind und die mikrofluidischen Ventile (12) auf einer den fluidischen Anschlüssen (11) gegenüberliegenden Seite des mikrofluidischen Chips (10) an die Steuereinrichtung (5) anschließbar sind,
wobei in Abhängigkeit der Ventilstellung der mikrofluidischen Ventile (12) Reagenzien von einem fluidischen Anschluss (11) in Richtung der Synthesekammer (14) förderbar sind.

15. Reagenzbehälter-Träger (17) zur Aufnahme in eine Reagenzbehälter-Aufnahme (1) einer Vorrichtung zur Synthese von Oligonukleotiden nach einem der Ansprüche 1 bis 13, der Reagenzbehälter-Träger (17) umfassend zumindest sechs, vorzugsweise zumindest sieben, Reagenzbehälter (18) mit unterschiedlichen Reagenzien, wobei jeweils ein Reagenzbehälter (18) eine der folgenden Reagenzien enthält:
- ein Reagenz enthaltend Phosphoramidite der Basen Adenin, Guanin, Cytosin, Thymin oder Uracil (B1,B2,B3,B4);
- ein Reagenz zur Detritylierung (DEBL) eines Endes eines Oligonukleotides, vorzugsweise enthaltend Dichloressigsäure, Trichloressigsäure oder Zinkbromid;
- ein Reagenz zur Aktivierung (ACT) einer detritylierten 5'-OH-Gruppe eines Oligonukleotids und zur Koppelung der Phosphoramidite, vorzugsweise enthaltend Tetrazol;
- ein Reagenz zur Oxidierung (OXI) eines Phosphittriesters, vorzugsweise eine Iod-Wasser Lösung umfassend eine schwache Base, insbesondere Pyridin, Lutidin oder Collidin, oder ein nichtwässriges Oxidationsmittel wie CSO;
- vorzugsweise zumindest ein Reagenz zur Blockierung (CAP1,CAP2) nicht umgesetzter 5'-OH-Gruppen von aktivierten Oligonukleotiden, vorzugsweise Acetanhydrid und N-Methylimidazol oder DMAP;
wobei jeder Reagenzbehälter (18) durch ein Versiegelungselement (19) verschlossen ist.

16. Verfahren zum Betreiben einer Vorrichtung zur Synthese von Oligonukleotiden, vorzugsweise nach einem der Ansprüche 1 bis 13,
die Vorrichtung umfassend
- eine Reagenzbehälter-Aufnahme (1) auf der ein mehrere mit Reagenzien befüllte Reagenzbehälter (18) umfassender Reagenzbehälter-Träger (17), insbesondere nach Anspruch 15, angeordnet wird;
- einen mikrofluidischen Chip (10), insbesondere nach Anspruch 14, mit einer Synthesekammer (14) zur Synthese der Oligonukleotide, mit mikrofluidischen Ventilen (12) und mit fluidischen Anschlüssen (11) für die Zufuhr der Reagenzien,
- eine Steuereinrichtung (5), insbesondere umfassend ein pneumatisches System, zur Steuerung der mikrofluidischen Ventile (12);
- fluidische Verbindungsmittel (2) zum Transport der Reagenzien aus den Reagenzbehältern (18) zu den fluidischen Anschlüssen (11) des mikrofluidischen Chips (10),
wobei folgende Schritte durchgeführt werden:
- Positionieren des mikrofluidischen Chips (10) in der Vorrichtung, sodass die fluidischen Anschlüsse (11) des mikrofluidischen Chips (10) fluchtend zu den fluidischen Verbindungsmitteln (2) angeordnet sind und die mikrofluidischen Ventile (12) des mikrofluidischen Chips (10) an die Steuereinrichtung (5) anschließbar sind;
- Positionieren des mikrofluidischen Chips (10), insbesondere mittels einer über eine Aktuatoreinrichtung (6) bewegbare Chip-Aufnahme (3), bis zwischen den fluidischen Anschlüssen (11) des mikrofluidischen Chips (10) und den fluidischen Verbindungsmitteln (2) eine Verbindung hergestellt ist;
- Anschließen der mikrofluidischen Ventile (12) an die Steuereinrichtung (5), insbesondere an das pneumatische System der Steuereinrichtung;
- Positionieren der Reagenzbehälter-Aufnahme (1), insbesondere mittels der Aktuatoreinrichtung (6), bis über die fluidischen Verbindungsmittel (2) eine Verbindung zwischen den Reagenzbehältern (18) und den fluidischen Anschlüssen (11) des mikrofluidischen Chips (10) hergestellt ist, sodass in Abhängigkeit der Ventilstellung der mikrofluidischen Ventile (12) Reagenzien aus den Reagenzbehältern (18) in Richtung der Synthesekammer (14) gefördert werden.

17. Verfahren nach Anspruch 16, **dadurch gekennzeichnet, dass** die Reagenzbehälter (18) mit einem pneumatischen System, insbesondere dem pneumatischen System der Steuereinrichtung (5), vorzugsweise über pneumatische Verbindungsmittel (4), verbunden sind und über den Gasdruck des pneumatischen Systems Reagenzien aus den Reagenzbehältern (18) in Richtung der Synthesekammer (14) transportiert werden.

18. Verfahren nach einem der Ansprüche 16 oder 17, **dadurch gekennzeichnet, dass** der mikrofluidische Chip (10) zumindest einen als Auslass (W1,W2) ausgebildeten fluidischen Auslassanschluss (11a,11b), vorzugsweise zwei als Auslass (W1,W2) ausgebildete fluidische Auslassanschlüsse (11a,11b), aufweist und die mikrofluidischen Ventile (12) über die Steuereinrichtung (5) einzeln aktuiert werden, um ein Reagenz von einem mit einem Reagenzbehälter (18) verbundenen fluidischen Anschluss (11) in Richtung des zumindest einen als Auslass (W1,W2) ausgebildeten Auslassanschlusses (11a,11b) zu fördern, indem die entsprechenden mikrofluidischen Ventile (12), welche die beiden fluidischen Anschlüsse (11;11a,11b) steuern, geöffnet werden.

19. Verfahren nach einem der Ansprüche 16 bis 18, **dadurch gekennzeichnet, dass** vor dem Beginn der Synthese eines Oligonukleotids folgende Schritte durchgeführt werden:
- Öffnen eines mikrofluidischen Ventils (12), das einen fluidischen Anschluss (11) für die Zuführung von Reagenz aus einem Reagenzbehälter (18) steuert;
- Schließen des geöffneten mikrofluidischen Ventils (12), wenn das mikrofluidische Ventil (12) vom Reagenz durchströmt ist;
- Spülen des mikrofluidischen Chips (10), vorzugsweise eines Hauptkanals (13a) des mikrofluidischen Chips (10), durch Öffnen eines mikrofluidischen Ventils (12), das einen fluidischen Anschluss (11) für die Zuführung von einem Lösungsmittel (SOL), vorzugsweise Acetonitril, steuert;
- vorzugsweise Trocknen des mikrofluidischen Chips (10), insbesondere eines Hauptkanals (13a) des mikrofluidischen Chips (10), durch Öffnen eines mikrofluidischen Ventils (12) welches die Zuführung eines Inertgases (GAS), vorzugsweise von Argon, steuert;
- Wiederholen der vorhergehenden Schritte bis jedes Reagenz aus den mit den fluidischen Anschlüssen (11) des mikrofluidischen Chips (10) verbundenen Reagenzbehältern (18) an das jeweilige mikrofluidische Ventil (12) des entsprechenden fluidischen Anschlusses (11) herangeführt ist.

20. Verfahren nach einem der Ansprüche 16 bis 19, **dadurch gekennzeichnet, dass** zur Synthese eines Oligonukleotids, vorzugsweise eines DNA-Strangs, folgende Schritte durchgeführt werden:
- Öffnen eines mikrofluidischen Ventils (12), das einen fluidischen Anschluss (11) für die Zuführung einer Reagenz zur Detritylierung (DEBL) einer mit einer Dimethoxytrityl-Schutzgruppe versehenen 5'-OH-Gruppe des Oligonukleotides oder zur Detritylierung eines Linker-Moleküls eines Trägermediums aus einem Reagenzbehälter (18) steuert;
- Abwechselndes Öffnen eines mikrofluidischen Ventils (12), das einen fluidischen Anschluss (11) für die Zuführung einer Reagenz zur Aktivierung (ACT) der detritylierten 5'-OH-Gruppe aus einem Reagenzbehälter (18) steuert und eines mikrofluidischen Ventils (12), das einen fluidischen Anschluss (11) für die Zuführung einer Reagenz enthaltend Phosphoramidite der Basen Adenin oder Guanin oder Cytosin oder Thymin oder Uracil (B1,B2,B3,B4) aus einem Reagenzbehälter (18) steuert;
- vorzugsweise Öffnen zumindest eines mikrofluidischen Ventils (12), das einen fluidischen Anschluss (11) für die Zuführung einer Reagenz zur Blockierung (CAP1,CAP2) nicht umgesetzter 5`-OH-Gruppen aus einem Reagenzbehälter (18) steuert;
- Öffnen eines mikrofluidischen Ventils (), das einen fluidischen Anschluss (11) für die Zuführung einer Reagenz zur Oxidation (OXI) einer Phosphittriesterbindung aus einem Reagenzbehälter (18) steuert.
- Wiederholen der vorhergehenden Schritte.
